# EUROPEAN PATENT APPLICATION

(11) **EP 1 519 615 A2**
(43) Date of publication of application: **30.03.2005**
(21) Application number: 04255982.3
(22) Date of filing: 29.09.2004
(51) Int. Cl.: H04Q 7/38

(54) **Wireless communication apparatus for selecting an access method and corresponding wireless communication method**

(30) Priority: 29.09.2003 JP 2003338350
(71) Applicant: Kabushiki Kaisha Toshiba, Tokyo 105-8001 (JP)
(72) Inventor: Matsuo, Ryoko Toshiba Corporation, Minato-ku Tokyo (JP); Inoue, Kaoru Toshiba Corporation, Minato-ku Tokyo (JP); Sakata, Ren Toshiba Corporation, Minato-ku Tokyo (JP); Nabetani, Toshihisa Toshiba Corporation, Minato-ku Tokyo (JP); Tandai, Tomoya Toshiba Corporation, Minato-ku Tokyo (JP)
(74) Representative: Midgley, Jonathan Lee

(57) **Abstract**

A wireless communication apparatus includes a wireless communication unit configured to conduct wireless communication by selecting one wireless scheme among a plurality of wireless schemes capable of conducting wireless communication, a storage which stores information obtained by classifying the plurality of wireless schemes into a plurality of classes, based on priorities set to the plurality of wireless schemes in accordance with at least one parameter, and a selector which selects one wireless scheme by which the wireless communication unit conducts wireless communication, based on classes stored in the storage.

## Description

### CROSS REFERENCE TO RELATED APPLICATIONS

This application claims benefit of priority under 35USC§119 to Japanese Patent Application No. 2003-338350, filed on September 29, 2003, the entire contents of which are incorporated by reference herein.

### BACKGROUND OF THE INVENTION

### Field of the Invention

The present invention relates to a wireless communication apparatus having a plurality of wireless schemes to conduct wireless communication with respectively different wireless schemes.

### Related Art

A wireless communication apparatus having a plurality of wireless communication systems has been proposed (see FIG. 8 in Japanese Patent Application Laid-Open Publication No. 2001-197538 and see FIG. 10 in Japanese Patent Application Laid-Open Publication No. 2002-112347). A wireless communication apparatus disclosed in Japanese Patent Application Laid-Open Publication No. 2001-197538 selects one of wireless communication systems in accordance with a table in which a plurality of wireless communication systems are provided with a priority order and classified. Conventional wireless communication systems disclosed in Japanese Patent Application Laid-Open Publication No. 2001-197538 and 2002-112347 select a communication path by giving priority to a specific parameter, such as a communication cost.

Conventionally, a wireless communication system is selected in accordance with a specific parameter. Therefore, it is not possible to select an optimum wireless communication system while taking a plurality of parameters into consideration.

Furthermore, conventionally, a plurality of wireless communication systems are uniquely provided with a priority order. Even if there is a wireless communication system that is low in priority order, but that is capable of maintaining a sufficient communication quality, therefore, a wireless communication system having high priority is selected unconditionally. This results in a problem that a large number of unnecessary handovers occur.

### SUMMARY OF THE INVENTION

The present invention has been achieved in order to solve the problems. An object of the present invention is to provide a wireless communication apparatus and a wireless communication method capable of precisely selecting one of a plurality of wireless schemes in accordance with a parameter.

In order to solve the above-described problem, an object of the present invention is to provide

A wireless communication apparatus according to one embodiment of the present invention, comprising:
a wireless communication unit configured to conduct wireless communication by selecting one wireless scheme among a plurality of wireless schemes capable of conducting wireless communication;
a storage which stores information obtained by classifying said plurality of wireless schemes into a plurality of classes, based on priorities set to said plurality of wireless schemes in accordance with at least one parameter; and
a selector which selects one wireless scheme by which said wireless communication unit conducts wireless communication, based on classes stored in said storage.

Furthermore, a wireless communication method according to one embodiment of the present invention, comprising:
conducting wireless communication by selecting one wireless scheme among a plurality of wireless schemes capable of conducting wireless communication;
classifying said plurality of wireless schemes based on priorities set to said plurality of wireless schemes in accordance with at least one parameter, and storing a result of the classification into a storage; and
selecting a wireless scheme by which a wireless communication unit conducts the wireless communication, based on the classes stored in said storage.

### BRIEF DESCRIPTION OF THE DRAWINGS

FIG. 1 is a block diagram showing a schematic configuration according to an embodiment of a wireless communication apparatus according to the present invention.
FIG. 2 is a block diagram showing an example of an internal configuration of the system selection control unit 13.
FIG. 3 is a flow chart showing a first example of a processing procedure in the classification unit 16.
FIG. 4 is a diagram showing an example of a table created by the classification unit 16 in accordance with the processing shown in FIG. 3.
FIG. 5 is a flow chart showing a first example of a processing procedure conducted by the selector 18 when the table shown in FIG. 4 has been created.
FIG. 6 is a diagram showing an example of the table obtained when classifying wireless communication systems into classes by using a communication quality QoS (Quality of Service) as the parameter.
FIG. 7 is a diagram showing an example of a table created by the classification unit 16.
FIG. 8 is a diagram showing an example of a table in which eight wireless communication systems 8a to 8h are classified into five classes by using power dissipation as the parameter 1 and available channel capacity as the parameter 2.
FIG. 9 is a flow chart showing a second example of a processing procedure conducted by the selector 18 when the table shown in FIG. 8 has been created.
FIG. 10 is a diagram showing an example of a table created by the classification unit 16.
FIG. 11 is a diagram showing an example of a table in which eight wireless communication systems 8a to 8h are classified into five classes by using the communication quality.
FIG. 12 is a flow chart showing a third example of a processing procedure conducted by the selector 18 when the table shown in FIG. 11 has been created.
FIG. 13 is a flow chart showing an example of a processing procedure conducted by the classification unit 16.
FIG. 14 is a diagram showing an example of a table created by the processing shown in FIG. 13.
FIG. 15 is a diagram showing an example of a table in which eight wireless communication systems 8a to 8h are classified into five classes by using the communication quality.
FIG. 16 is a diagram showing an example of a table created by the classification unit 16.
FIG. 17 is a diagram showing an example of a table in which eight wireless communication systems 8a to 8h are classified into five classes by using voice as the application 1.
FIG. 18 is a flow chart showing a processing procedure conducted by the selector 18 to select a wireless communication system 8 on the basis of the table shown in FIG. 17.
FIG. 19 is a flow chart showing a processing procedure conducted by the selector 18 to select a wireless communication system 8 on the basis of the table shown in FIG. 17 when the application is video streaming.
FIG. 20 is a diagram showing an example of a table created by the classification unit 16.
FIG. 21 is a diagram showing a table obtained by classifying a plurality of wireless communication systems 8 into classes on the basis of the adaptation degree of a parameter when the application is voice.
FIG. 22 is a diagrams showing a table in the case where the application is videophone.
FIG. 23 is a diagram showing an example of a table obtained by classifying a plurality of wireless communication systems 8 into classes on the basis of adaptation degrees of parameters at the time of communication start and during communication.
FIG. 24 is a diagram showing an example of a table obtained by classifying a plurality of wireless communication systems 8 into classes on the basis of adaptation degrees of parameters at the time of communication start and during communication.
FIG. 25 is a table showing to what degree another wireless communication system 8 is suitable for the currently selected wireless communication system 8c.
FIG. 26 is a diagram showing a table obtained when the application is voice by providing a plurality of wireless communication systems 8 respectively with weights.
FIG. 27 is a block diagram showing a schematic configuration according to a tenth embodiment of a wireless communication apparatus of the present invention.
FIG. 28 is a diagram showing a table in which a plurality of wireless communication systems 8 are classified into classes on the basis of adaptation degrees for parameters.
FIG. 29 shows a table obtained when the application is voice by providing a plurality of wireless communication systems 8 respectively with weights.
FIG. 30 is a flowchart showing one example of processing procedure of a ten embodiment.
FIG. 31 is a diagram showing a table obtained by classifying a plurality of wireless communication systems 8 into classes on the basis of adaptation degrees of parameters.

### DETAILED DESCRIPTION OF THE INVENTION

Hereafter, embodiments of the present invention will be described with reference to the drawings.

### (First Embodiment)

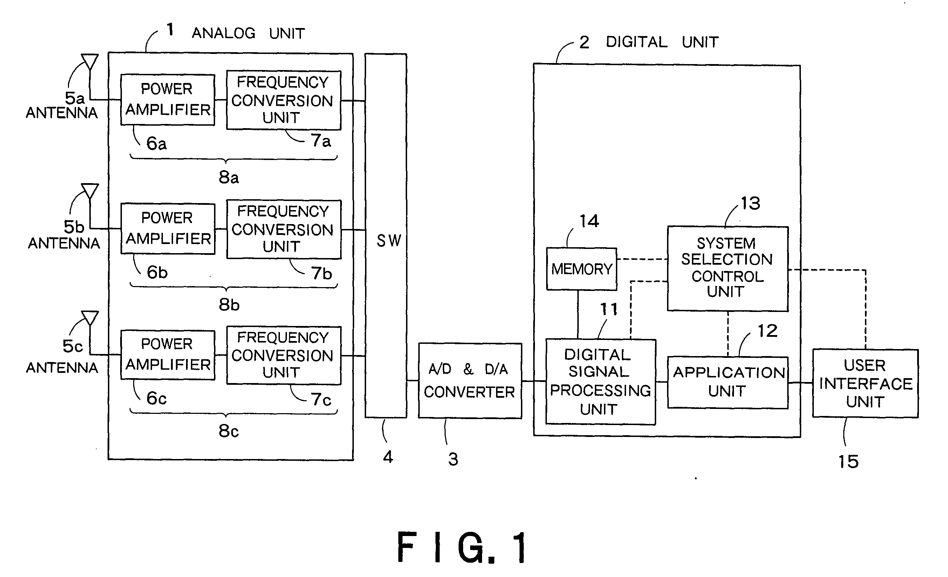

FIG. 1 is a block diagram showing a schematic configuration according to an embodiment of a wireless communication apparatus according to the present invention. The wireless communication apparatus shown in FIG. 1 includes an analog unit 1 to process an analog wireless signal, a digital unit 2 to process a digital wireless signal, an A/D & D/A converter 3, and a changeover unit 4 to change over between transmission and reception.

The analog unit 1 includes antennas 5a, 5b and 5c, power amplifiers 6a, 6b and 6c, and frequency conversion units 7a, 7b and 7c in association with a plurality of wireless communication systems, respectively. FIG. 1 shows an example in which three wireless communication systems 8a, 8b and 8c are included. However, there is especially no limit in the number of wireless communication systems. However, a plurality of wireless communication systems 8a, 8b and 8c are often referred to generically as wireless communication system 8. A plurality of antennas 5a, 5b and 5c are often referred to generically as antenna 5. A plurality of power amplifiers 6a, 6b and 6c are often referred to generically as power amplifier 6. A plurality of frequency conversion units 7a, 7b and 7c are often referred to generically as frequency conversion unit 7.

A digital unit 2 includes a digital signal processing unit 11, an application unit 12, a system selection control unit 13, and a memory 14. A user interface unit 15 is connected to the system selection control unit 13.

Operation of the wireless communication apparatus shown in FIG. 1 will now be described. First, when starting communication, the system selection control unit 13 selects a wireless communication system 8 to be used for communication on the basis of information supplied from the application unit 12 and the user interface unit 15. If a wireless communication system 8 to be used by the system selection control unit 13 is selected, then, for example, software that implements the function of the wireless communication system 8 selected from the memory 14 is downloaded to the digital signal processing unit 11, and the digital signal processing unit 11 implements the function of the selected wireless communication system 8. Furthermore, the analog unit 1 selects a power amplifier 6 and a frequency conversion unit 7 associated with the wireless communication system 8 to be used, and the selected power amplifier 6 and frequency conversion unit 7 are connected to the A/D & D/A converter 3 via the changeover unit 4.

If the wireless communication system selected by the system selection control unit 13 is the wireless communication system 8b, then the antenna 5b, the power amplifier 6b and the frequency conversion unit 7b in the analog unit 1 are selected.

If signal is received in this state, then received signal input to the antenna 5b is amplified by the power amplifier 6b, converted to a baseband signal in the frequency conversion unit 7b, and then input to the A/D & D/A converter 3. After the received signal is converted from an analog signal to a digital signal in the A/D & D/A converter 3, decoding processing associated with encoding processing of the wireless communication system 8 selected by the digital signal processing unit 11 is conducted. The decoded data is input to the application unit 12, subjected to processing associated with application, then input to the user interface unit 15, and transferred to the user.

Data in the wireless communication system 8 with an error detection code such as a CRC code added thereto is subjected to decoding processing in the digital signal processing unit 11, and then subjected to error detection processing in the digital signal processing unit 11. An error detection result is sent to the system selection control unit 13. The system selection control unit 13 manages the error detection result sent from the digital signal processing unit 11, and determines whether handover to another system is necessary.

On the other hand, when transmitting data, a user's request input at the user interface unit 15 is input to the application unit 12, data is subjected to processing associated with application, then input to the digital signal processing unit 11, and subjected to encoding processing associated with the selected wireless communication system 8b. The data encoded in the digital signal processing unit 11 is input to the A/D & D/A converter 3, converted to an analog signal, then subjected to frequency conversion to an RF frequency in the frequency conversion unit 7b, and output from the antenna 5b.

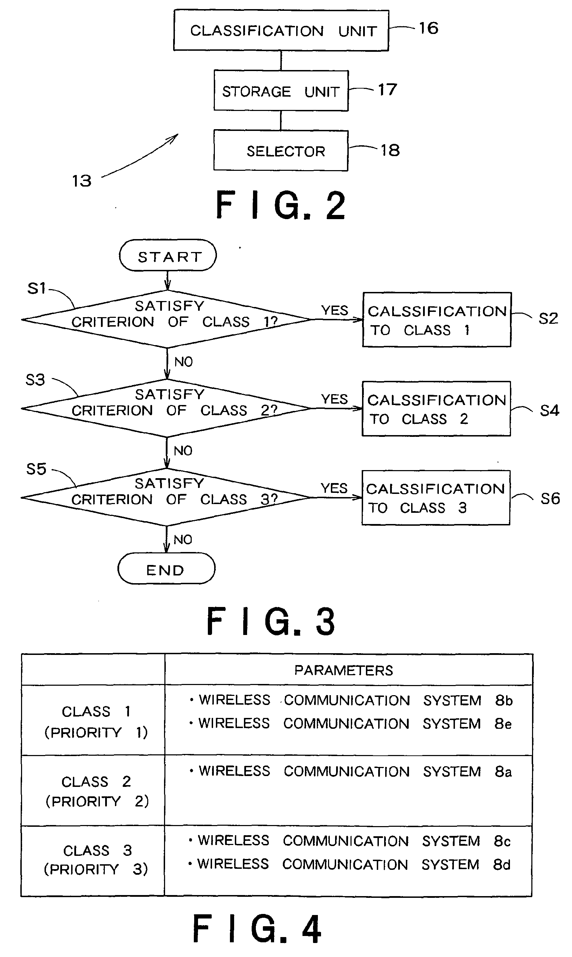

FIG. 2 is a block diagram showing an example of an internal configuration of the system selection control unit 13. As shown in FIG. 2, the system selection control unit 13 includes a classification unit 16 to create a table in which the wireless communication systems 8 are classified into a plurality of classes, a storage 17 to store the table created by the classification unit 16, and a selector 18 to select one from among the wireless communication systems 8 classified into classes.

The wireless communication systems 8 are classified into classes according to their respective priorities. A wireless communication system 8 having the highest priority is classified into class 1. A wireless communication system 8 having the second highest priority is classified into class 2. A wireless communication system having the lowest priority is classified into class 3.

FIG. 3 is a flow chart showing a first example of a processing procedure in the classification unit 16. First, it is determined whether a subject wireless communication system 8 satisfies a criterion of the class 1, on the basis of priority for a specific parameter (step S1). If the criterion of the class 1 is satisfied, then the wireless communication system 8 is classified into the class 1 (step S2).

If the criterion of the class 1 is not satisfied, then it is determined on the basis of priority whether a criterion of the class 2 is satisfied (step S3). If the criterion of the class 2 is satisfied, then the wireless communication system 8 is classified into the class 2 (step S4).

If the criterion of the class 2 is not satisfied, then it is determined whether a criterion of the class 3 is satisfied (step S5). If the criterion of the class 3 is satisfied, then the wireless communication system 8 is classified into the class 3 (step S6).

FIG. 4 is a diagram showing an example of a table created by the classification unit 16 in accordance with the processing shown in FIG. 3. An example in which five wireless communication systems 8a to 8e are classified is shown. Wireless communication systems 8b and 8e are classified into the class 1 having the highest priority. A wireless communication system 8a is classified into the class 2 having the second highest priority. Wireless communication systems 8c and 8d are classified into the class 3 having the lowest priority. The created table is stored in the storage 17.

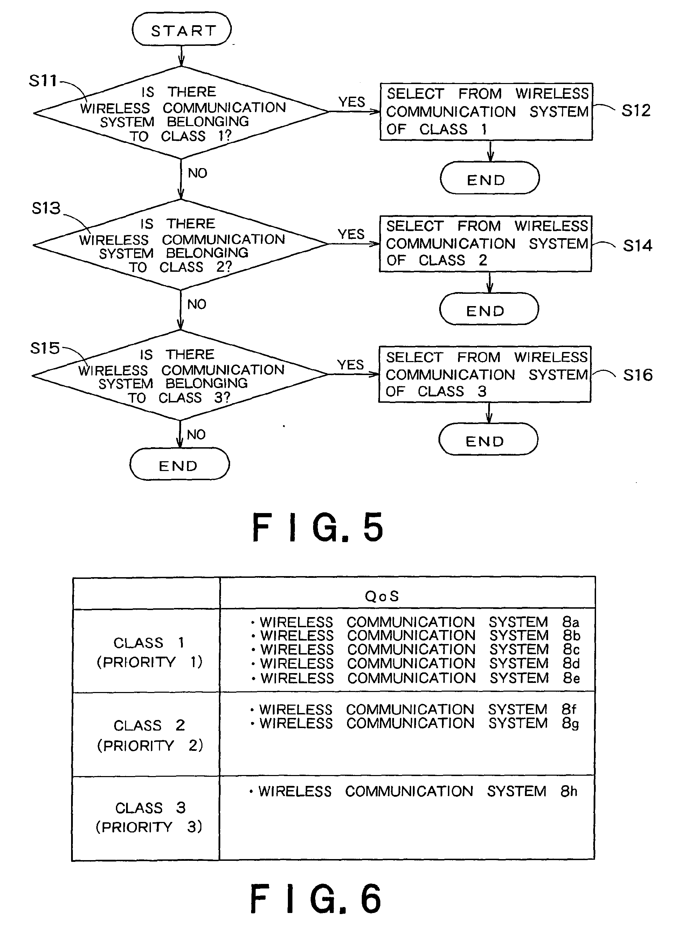

FIG. 5 is a flow chart showing a first example of a processing procedure conducted by the selector 18 when the table shown in FIG. 4 has been created. First, it is determined whether a wireless communication system belonging to the class 1 is present (step S11). If one or more wireless communication systems belonging to the class 1 are present, then one is selected from among the wireless communication systems 8 belonging to the class 1 (step S12). If there are a plurality of wireless communication systems 8 in the class 1, then one wireless communication system 8 is selected on the basis of other parameters.

If a wireless communication system belonging to the class 1 is not present, then it is determined whether a wireless communication system belonging to the class 2 is present (step S13). If one or more wireless communication systems 8 belonging to the class 2 are present, then one is selected from among the wireless communication systems 8 belonging to the class 2 (step S14).

If a wireless communication system belonging to the class 2 is not present, then it is determined whether a wireless communication system belonging to the class 3 is present (step S15). If one or more wireless communication systems belonging to the class 3 are present, then one is selected from among the wireless communication systems 8 belonging to the class 3 (step S16).

FIG. 6 is a diagram showing an example of the table obtained when classifying wireless communication systems into classes by using a communication quality QoS (Quality of Service) as the parameter. Among eight wireless communication systems 8a to 8h, the five wireless communication systems 8a to 8e are classified into the class 1, the wireless communication systems 8f and 8g are classified into the class 2, and the wireless communication system 8h is classified into the class 3.

With reference to FIGS. 4 and 6, examples in which wireless communication systems are classified into three classes 1 to 3 have been described. However, there is not a special limit in the number of classes.

Thus, in the first embodiment, a plurality of wireless communication systems 8 are provided with a priority order in accordance with a parameter and classified into a plurality of classes, and one wireless communication system 8 is selected from among wireless communication systems 8 that belong to the class 1 having the highest priority. Therefore, a wireless communication system 8 suitable for the parameter can be selected.

### (Second Embodiment)

In the second embodiment, a plurality of wireless communication systems 8 are classified into a plurality of classes for every two parameters.

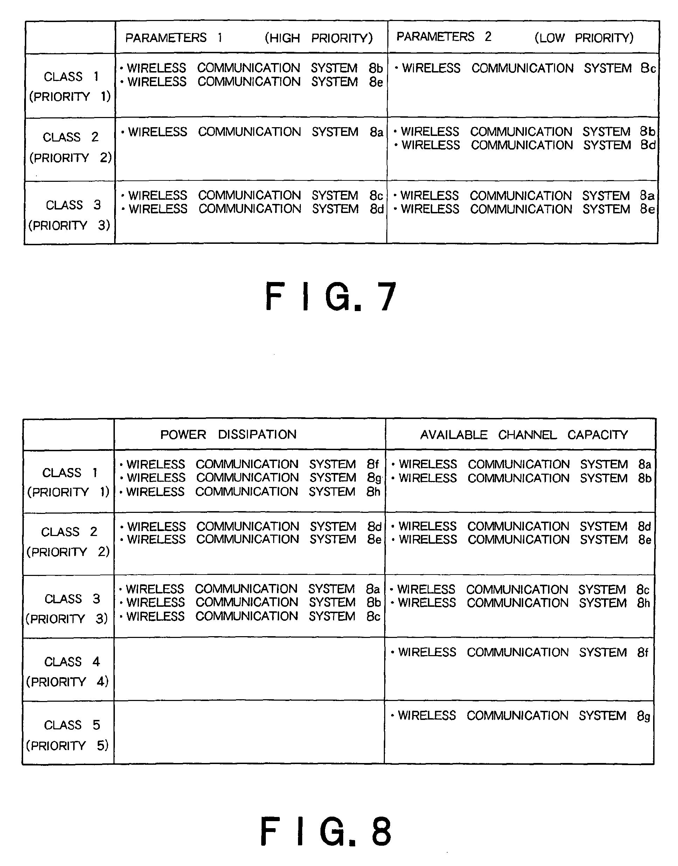

A wireless communication apparatus of the second embodiment has a configuration similar to that shown in FIG. 1. FIG. 7 is a diagram showing an example of a table created by the classification unit 16. The classification unit 16 conducts the same processing as that shown in FIG. 3 for each of the parameters 1 and 2, and creates the table shown in FIG. 7. The created table is stored in the storage 17.

If classification is conducted on the basis of the parameter 1, wireless communication systems 8b and 8c are classified into class 1 having the highest priority, a wireless communication system 8a is classified into class 2 having the second highest priority, and wireless communication systems 8c and 8d are classified into class 3 having the lowest priority as shown in FIG. 7. If classification is conducted on the basis of the parameter 2, the wireless communication system 8c is classified into the class 1, the wireless communication systems 8b and 8d are classified into the class 2, and the wireless communication systems 8a and 8e are classified into the class 3.

In selecting a wireless communication system 8 to be used, first, the wireless communication system 8b and the wireless communication system 8c belonging to the class 1 having the highest priority become candidates for selection according to the classification based on the parameter 1. Subsequently, according to the classification using the parameter 2, the wireless communication system 8b is classified into the class 2 and the wireless communication system 8e is classified into the class 3. Therefore, the wireless communication system 8b, which belongs to the same class 1 as the wireless communication system 8e on the basis of the parameter 1, but belongs to the class 2 having higher priority on the basis of the parameter 2, is selected as the wireless communication system 8 to be used.

In this way, a wireless communication system 8 is selected on the basis of the two parameters 1 and 2. Therefore, an optimum wireless communication system 8 satisfying a plurality of parameters can be selected.

A concrete example of the second embodiment will now be described. FIG. 8 shows an example of a table in which eight wireless communication systems 8a to 8h are classified into five classes by using power dissipation as the parameter 1 and available channel capacity as the parameter 2.

In FIG. 8, wireless communication systems 8f, 8g and 8h are classified into class 1, wireless communication systems 8d and 8e are classified into class 2, and wireless communication systems 8a, 8b and 8c are classified into class 3 on the basis of power dissipation, which is the parameter 1. As for the criterion of this classification, for example, the class 1 corresponds to wireless communication systems that completely satisfy a criterion of a parameter of power dissipation, the class 2 corresponds to wireless communication systems that do not completely satisfy the criterion of the parameter of power dissipation, but fall below it, and the class 3 corresponds to wireless communication systems that remarkably fall below the criterion of the parameter of power dissipation. Although the wireless communication systems 8 have been classified into three classes in this example, it is not always necessary that the number of classes is three, but the number of classes may be greater than or less than three.

Furthermore, in FIG. 8, on the basis of the available channel capacity as the parameter 2, the wireless communication systems 8a and 8b are classified into class 1, the wireless communication systems 8d and 8e are classified into class 2, and the wireless communication systems 8c and 8h are classified into class 3, whereas the wireless communication system 8f is classified into the class 4 and the wireless communication system 8g is classified into the class 5.

As for the criterion for this classification, for example, the class 1 corresponds to a wireless communication system having a available channel capacity of approximately 90%. The class 2 corresponds to a wireless communication system having a available channel capacity of 70%. The class 3 corresponds to a wireless communication system having a available channel capacity of 50%. The class 4 corresponds to a wireless communication system having a available channel capacity of 30%. The class 5 corresponds to a wireless communication system having a available channel capacity of 10%. Although the wireless communication systems 8 have been classified into five classes in this example, it is not always necessary that the number of classes is five, but the number of classes may be greater than or less than five.

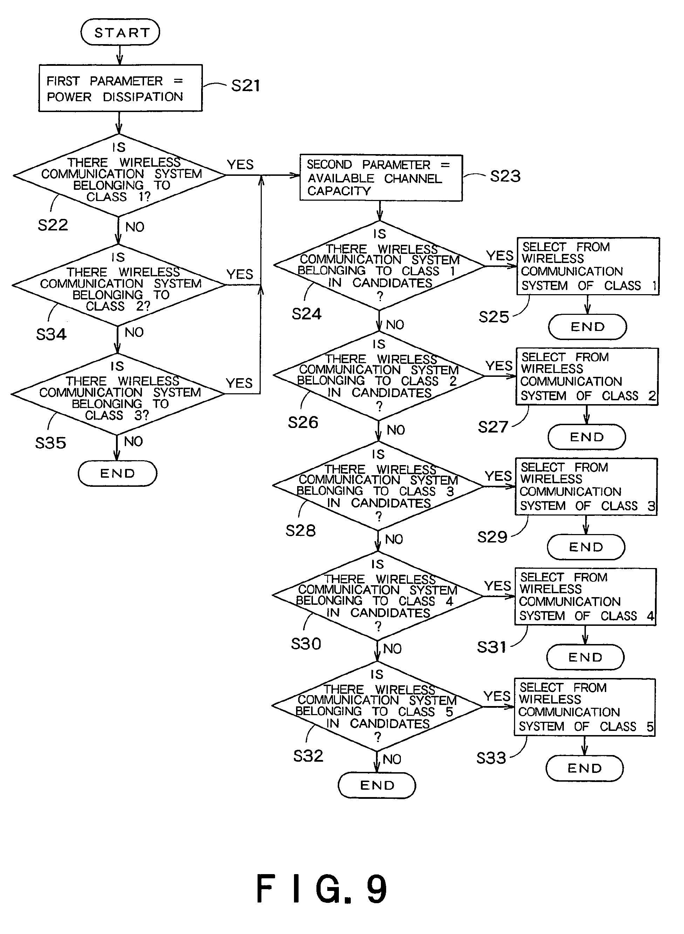

FIG. 9 is a flow chart showing a second example of a processing procedure conducted by the selector 18 when the table shown in FIG. 8 has been created. First, power dissipation is set as the parameter 1 (step S21), and it is determined whether a wireless communication system 8 belonging to the class 1 is present (step S22). If a wireless communication system 8 belonging to the class 1 is present, then the available channel capacity is set as the parameter 2 (step S23).

Subsequently, it is determined whether a wireless communication system 8 belonging to the class 1 classified on the basis of the parameter 2 is present (step S24). If one or more wireless communication systems 8 belonging to the class 1 are present, then one of them is selected (step S25).

If the decision at the step S24 yields a negative result, then it is determined whether a wireless communication system 8 belonging to class 2 classified on the basis of the parameter 2 is present (step S26). If one or more wireless communication systems 8 belonging to the class 2 are present, then one of them is selected (step S27).

If the decision at the step S26 yields a negative result, then it is determined whether a wireless communication system 8 belonging to class 3 classified on the basis of the parameter 2 is present (step S28). If one or more wireless communication systems 8 belonging to the class 3 are present, then one of them is selected (step S29).

If the decision at the step S28 yields a negative result, then it is determined whether a wireless communication system 8 belonging to class 4 classified on the basis of the parameter 2 is present (step S30). If one or more wireless communication systems 8 belonging to the class 4 are present, then one of them is selected (step S31).

If the decision at the step S30 yields a negative result, then it is determined whether a wireless communication system 8 belonging to class 5 classified on the basis of the parameter 2 is present (step S32). If one or more wireless communication systems 8 belonging to the class 5 are present, then one of them is selected (step S33).

On the other hand, if a wireless communication system 8 belonging to class 1 classified on the basis of the parameter 1 is not present at the step S22, then it is determined whether a wireless communication system 8 belonging to the class 2 classified on the basis of the parameter 1 is present (step S34). If a wireless communication systems 8 belonging to the class 2 is present, then the processing of the steps S23 to S33 is conducted.

If a wireless communication system 8 belonging to class 2 classified on the basis of the parameter 1 is not present at the step S34, then it is determined whether a wireless communication system 8 belonging to the class 3 classified on the basis of the parameter 1 is present (step S35). If a wireless communication system 8 belonging to the class 3 is present, then the processing of the steps S23 to S33 is conducted.

Thus, in the second embodiment, a plurality of wireless communication systems 8 are classified into a plurality of classes for every two parameters, and a wireless communication system 8 is selected by taking two parameters into consideration. Therefore, a wireless communication system 8 that most satisfies two parameters can be selected.

### (Third Embodiment)

In the third embodiment, a plurality of wireless communication systems 8 are classified into a plurality of classes for every three parameters, and these parameters are provided with a priority order.

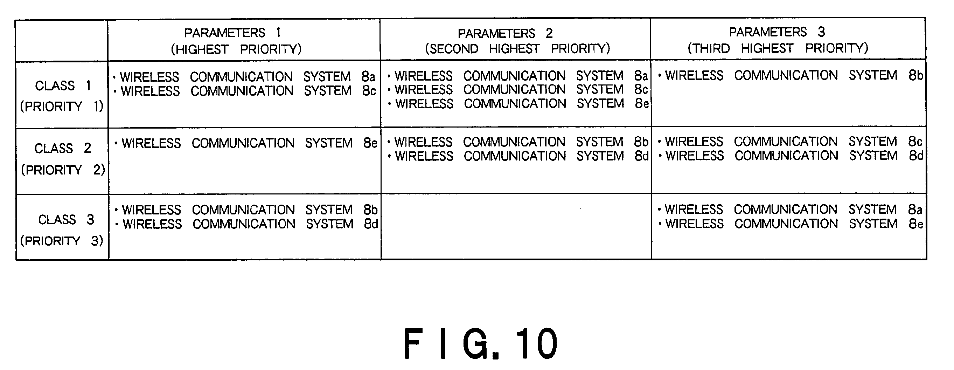

A wireless communication apparatus of the third embodiment has a configuration similar to that shown in FIG. 1. FIG. 10 is a diagram showing an example of a table created by the classification unit 16. The classification unit 16 conducts the same processing as that shown in FIG. 3 for each of the parameters 1 to 3, and creates the table shown in FIG. 10.

As shown in FIG. 10, on the basis of the parameter 1, wireless communication systems 8a and 8c are classified into class 1 having the highest priority, a wireless communication system 8e is classified into class 2 having the second highest priority, and wireless communication systems 8b and 8d are classified into class 3 having the lowest priority. Furthermore, on the basis of the parameter 2, the wireless communication systems 8a, 8c and 8e are classified into the class 1, and the wireless communication systems 8b and 8d are classified into the class 2. Furthermore, on the basis of the parameter 3, the wireless communication system 8b is classified into the class 1, the wireless communication systems 8c and 8d are classified into the class 2, and the wireless communication systems 8a and 8e are classified into the class 3.

The parameters 1 to 3 are provided with a priority order. The parameter 1 has the highest priority, and the parameter 2 has the second highest priority. The parameter 3 has the lowest priority.

In selecting a wireless communication system 8 to be used, first, classification based on the parameter 1 having the highest priority is conducted, and the wireless communication systems 8a and 8c belonging to the class 1 having the highest priority become candidates for selection.

Subsequently, according to the classification based on the parameter 2 having the second highest priority, both the wireless communication systems 8a and 8c are classified into the class 1. Therefore, the wireless communication system 8 to be used cannot be determined at this stage. According to the classification based on the parameter 3 having the third highest priority, the wireless communication system 8c is classified into the class 2, and the wireless communication system 8a is classified into the class 3. Therefore, the wireless communication system 8c, which belongs to the same class 1 as the wireless communication system 8a on the basis of the parameter 1 having the highest priority and the parameter 2 having the second highest priority, but belongs to the class 2 having higher priority on the basis of the parameter 3 having the third highest priority, is selected as the wireless communication system 8 to be used.

In this way, a wireless communication system 8 is selected on the basis of criteria of the three parameters, i.e., the first parameter having the highest priority, the second parameter having the second highest priority, and the third parameter having the third highest priority. Therefore, an optimum wireless communication system 8 satisfying a plurality of parameters can be selected.

An example in which a wireless communication system 8 is selected on the basis of the classification based on three parameters 1 to 3 provided with a priority order has been described. However, it is not necessary that the number of parameters is always three. A wireless communication system 8 to be used may also be selected on the basis of classification based on the criteria of at least four or at most two parameters provided with a priority order.

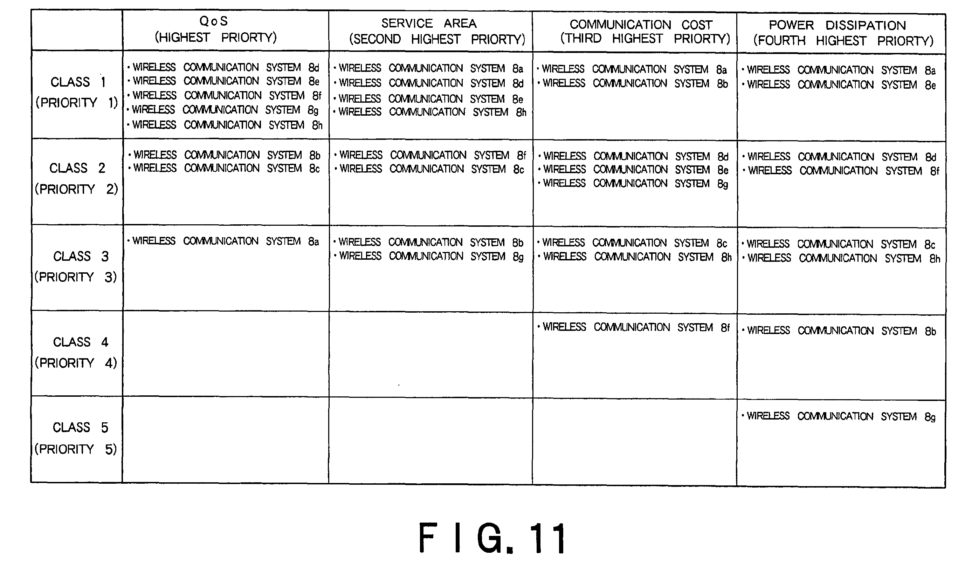

Hereafter, a concrete example of the third embodiment will be described. FIG. 11 shows an example of a table in which eight wireless communication systems 8a to 8h are classified into five classes by using the communication quality (QoS) as the parameter 1 having the highest priority, the service area as the parameter 2 having the second highest priority, the communication cost as the parameter 3 having the third highest priority and power dissipation as the parameter 4 having the fourth highest priority.

In FIG. 11, wireless communication systems 8d to 8h are classified into class 1, wireless communication systems 8b and 8c are classified into class 2, and a wireless communication system 8a is classified into class 3, on the basis of the reference of QoS which is the parameter having the highest priority. As for the criterion of this classification, for example, the class 1 corresponds to wireless communication systems that completely satisfy a criterion of a parameter of QoS, the class 2 corresponds to wireless communication systems that do not completely satisfy the criterion of the parameter of power dissipation, but fall somewhat below it, and the class 3 corresponds to wireless communication systems that remarkably fall below the criterion of the parameter of QoS. Although the wireless communication systems 8 have been classified into three classes in this example, it is not always necessary that the number of classes is three, but the number of classes may be greater than or less than three.

Furthermore, on the basis of the criterion of the service area serving as the parameter having the second highest priority, the wireless communication systems 8a, 8d, 8e and 8h are classified into class 1, the wireless communication systems 8c and 8f are classified into class 2, and the wireless communication systems 8b and 8g are classified into class 3. As for the criterion for this classification, for example, the class 1 corresponds to a wireless communication system having a population cover ratio of service area equal to at least 90%. The class 2 corresponds to a wireless communication system having a population cover ratio of service area equal to at least 70%. The class 3 corresponds to a wireless communication system having a population cover ratio of service area equal to at least 50%. Although the eight wireless communication systems 8 have been classified into three classes in this example, it is not always necessary that the number of classes is three, but the number of classes may be greater than or less than three.

Subsequently, on the basis of the criterion of the communication cost, which is the parameter having the third highest priority, the wireless communication systems 8a and 8b are classified into class 1, and the wireless communication systems 8d, 8e and 8g are classified into class 2. And the wireless communication systems 8c and 8h are classified into class 3, and the wireless communication system 8f is classified into class 4. As for the criterion for this classification, for example, the class 1 corresponds to a wireless communication system having a communication cost per unit quantity equal to approximately 10 yen (or 10 cent). The class 2 corresponds to a wireless communication system having a communication cost per unit quantity equal to approximately 30 yen (or 30 cent). The class 3 corresponds to a wireless communication system having a communication cost per unit quantity equal to approximately 50 yen (or 50 cent). The class 4 corresponds to a wireless communication system having a communication cost per unit quantity equal to approximately 100 yen (or one dollar). Although the eight wireless communication systems 8 have been classified into four classes in this example, it is not always necessary that the number of classes is three, but the number of classes may be greater than or less than four.

Subsequently, on the basis of the criterion of the power dissipation, which is the parameter having the fourth highest priority, the wireless communication systems 8a and 8e are classified into class 1, and the wireless communication systems 8d and 8f are classified into class 2. And the wireless communication systems 8c and 8h are classified into class 3, and the wireless communication system 8b is classified into class 4. The wireless communication system 8g is classified into class 5. As for the criterion for this classification, for example, the class 1 corresponds to a wireless communication system having power dissipation equivalent to continuous use time of approximately 10 hours. The class 2 corresponds to a wireless communication system having power dissipation equivalent to continuous use time of approximately 5 hours. The class 3 corresponds to a wireless communication system having power dissipation equivalent to continuous use time of approximately 3 hours. The class 4 corresponds to a wireless communication system having power dissipation equivalent to continuous use time of approximately 2 hours. The class 5 corresponds to a wireless communication system having power dissipation equivalent to continuous use time of approximately 1 hour. Although the eight wireless communication systems 8 have been classified into five classes in this example, it is not always necessary that the number of classes is five, but the number of classes may be greater than or less than five.

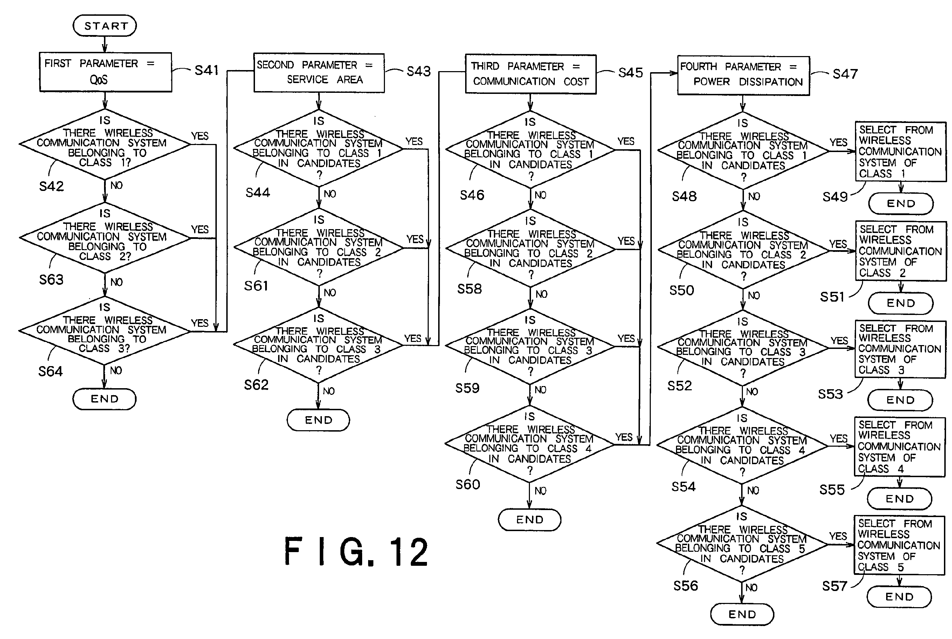

FIG. 12 is a flow chart showing a third example of a processing procedure conducted by the selector 18 when the table shown in FIG. 11 has been created. First, the communication quality (QoS) is set as the parameter 1 (step S41), and it is determined whether a wireless communication system 8 belonging to the class 1 classified on the basis of the parameter 1 is present (step S42). If such a wireless communication system 8 is present, then the service area is set as the parameter 2 (step S43), and it is determined whether a wireless communication system 8 belonging to the class 1 classified on the basis of the parameter 2 is present (step S44). If such a wireless communication systems 8 is present, then the power dissipation is set as the parameter 3 (step S45), and it is determined whether a wireless communication system 8 belonging to the class 1 classified on the basis of the parameter 3 is present (step S46). If such a wireless communication system 8 is present, then the power dissipation is set as the parameter 4 (step S47), and it is determined whether a wireless communication system 8 belonging to the class 1 classified on the basis of the parameter 4 is present (step S48). If one or more such wireless communication systems 8 are present, then one is selected from the wireless communication systems 8 belonging to the class 1 (step S49).

On the other hand, if the decision at the step S48 yields a negative result, then it is determined whether a wireless communication system 8 belonging to class 2 classified on the basis of the parameter 4 is present (step S50). If one or more such wireless communication systems 8 are present, then one is selected from the wireless communication systems 8 belonging to the class 2 (step S51).

On the other hand, if the decision at the step S50 yields a negative result, then it is determined whether a wireless communication system 8 belonging to class 3 classified on the basis of the parameter 4 is present (step S52). If one or more such wireless communication systems 8 are present, then one is selected from the wireless communication systems 8 belonging to the class 3 (step S53).

On the other hand, if the decision at the step S52 yields a negative result, then it is determined whether a wireless communication system 8 belonging to class 4 classified on the basis of the parameter 4 is present (step S54). If one or more such wireless communication systems 8 are present, then one is selected from the wireless communication systems 8 belonging to the class 4 (step S55).

On the other hand, if a wireless communication system 8 belonging to the class 4 classified on the basis of the parameter 4 is not present at the step S54, then it is determined whether a wireless communication system 8 belonging to the class 5 classified on the basis of the parameter 4 is present (step S56). If one or more such wireless communication systems 8 are present, then one is selected from the wireless communication systems 8 belonging to the class 5 (step S57).

The above-described processings of the steps S47 to S57 are also conducted in order when the decision at the step S58, S59 or S60 yields an affirmative result. Furthermore, the above-described processing of the steps S45 to S57 is also conducted when the decision at the step S61 or S62 yields an affirmative result. Furthermore, the above-described processings of the steps S43 to S57 are also conducted when the decision at the step S63 or S64 yields an affirmative result.

In selecting a wireless communication system 8 to be used, first in the processing shown in FIG. 12, the wireless communication systems 8d to 8h belonging to the class 1 having the highest priority become candidates for selection according to the classification based on the criterion of QoS, which is the parameter having the highest priority. Subsequently, according to the classification based on the service area, which is the parameter having the second highest priority, the wireless communication systems 8d, 8e and 8h included in the five selection candidates are classified into the class 1, the wireless communication system 8f is the classified into the class 2, and the wireless communication system 8g is classified into the class 3. Therefore, the wireless communication systems 8d, 8e and 8h, which belong to the same class 1 as the wireless communication systems 8f and 8g on the basis of the parameter of QoS having the highest priority, but belongs to the class 1 having the highest priority classified on the basis of the parameter of the service area having the second highest priority, remain as the candidates for selection.

Subsequently, according to the classification based on the communication cost, which is the parameter having the third highest priority, the wireless communication systems 8d and 8e are classified into the class 2, and the wireless communication system 8h is classified into the class 3. Therefore, the wireless communication systems 8d and 8e, which belong to the same class 1 as the wireless communication system 8h on the basis of the parameter of the service area having the second highest priority, but belongs to the class 2 having a higher priority classified on the basis of the parameter of the communication cost having the third highest priority, remain as the candidates for selection.

And, according to the classification based on the power dissipation, which is the parameter having the fourth highest priority, the wireless communication system 8e is classified into the class 1, and the wireless communication system 8d is classified into the class 2. Therefore, the wireless communication system 8e, which belongs to the same class 2 as the wireless communication system 8d on the basis of the parameter of the communication cost having the third highest priority, but belongs to the class 1 having the highest priority classified on the basis of the parameter of the power dissipation having the fourth highest priority, is selected as the wireless communication system 8 to be used.

Thus, in the third embodiment, a wireless communication system 8 can be selected by taking the parameters 1 to 4 provided with a priority order into consideration. Therefore, an optimum wireless communication system 8 satisfying a plurality of connection conditions can be selected.

An example in which a wireless communication system 8 to be used is selected on the basis of the classification based on the criteria of four parameters, i.e., the QoS, service area, communication cost and power dissipation which are provided with a priority order has been described. However, it is not necessary that the number of parameters is always four. A wireless communication system 8 to be used may also be selected on the basis of classification based on the criteria of at least five or at most three parameters provided with a priority order.

### (Fourth Embodiment)

In the fourth embodiment, a plurality of wireless communication systems 8 are classified into a plurality of classes on the basis of degrees of achievement of wireless communication systems for parameters.

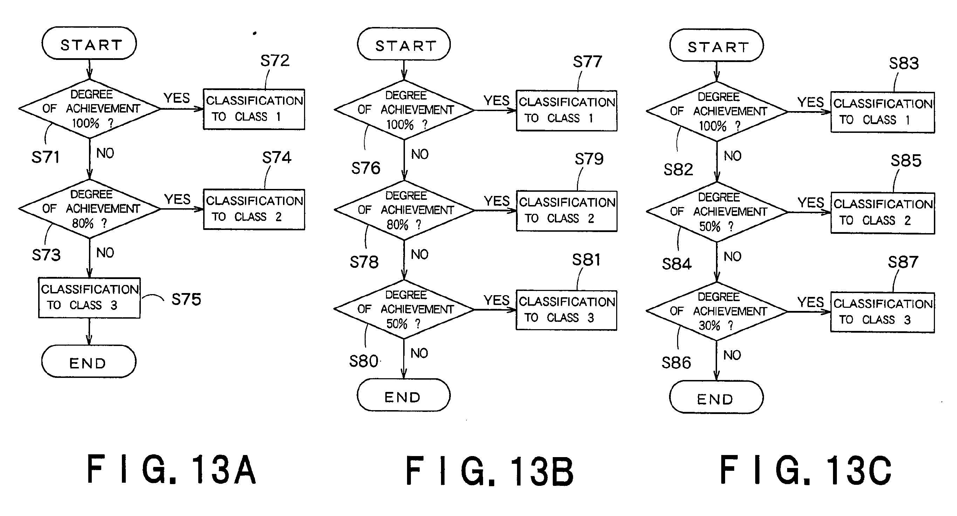

A wireless communication apparatus of the fourth embodiment has a configuration similar to that shown in FIG. 1. FIG. 13 is a flow chart showing an example of a processing procedure conducted by the classification unit 16. FIG. 13A shows a processing procedure for conducting classification on the basis of a parameter 1. FIG. 13B shows a processing procedure for conducting classification on the basis of a parameter 2. FIG. 13C shows a processing procedure for conducting classification on the basis of a parameter 3.

When conducting classification on the basis of the parameter 1, it is first determined whether a degree of achievement of a subject wireless communication system 8 as compared with the parameter 1 is 100% (step S71). If the achievement degree is 100%, then the subject wireless communication system 8 is classified into class 1 (step S72). If the achievement degree is not 100%, then it is determined whether the achievement degree is 80% (step S73). If the achievement degree is 80%, then the subject wireless communication system is classified into class 2 (step S74). If the achievement degree is not 80%, then the subject wireless communication system is classified into class 3 (step S75).

When conducting classification on the basis of the parameter 2, it is first determined whether a degree of achievement of a subject wireless communication system 8 as compared with the parameter 2 is 100% (step S76). If the achievement degree is 100%, then the subject wireless communication system 8 is classified into class 1 (step S77). If the achievement degree is not 100%, then it is determined whether the achievement degree is 80% (step S78). If the achievement degree is 80%, then the subject wireless communication system is classified into class 2 (step S79). If the achievement degree is not 80%, then it is determined whether the achievement degree is 50% (step S80). If the achievement degree is 50%, then the subject wireless communication system is classified into class 3 (step S81).

When conducting classification on the basis of the parameter 3, it is first determined whether a degree of achievement of a subject wireless communication system 8 as compared with the parameter 3 is 100% (step S82). If the achievement degree is 100%, then the subject wireless communication system 8 is classified into class 1 (step S83). If the achievement degree is not 100%, then it is determined whether the achievement degree is 50% (step S84). If the achievement degree is 50%, then the subject wireless communication system is classified into class 2 (step S85). If the achievement degree is not 50%, then it is determined whether the achievement degree is 30% (step S86). If the achievement degree is 30%, then the subject wireless communication system is classified into class 3 (step S87).

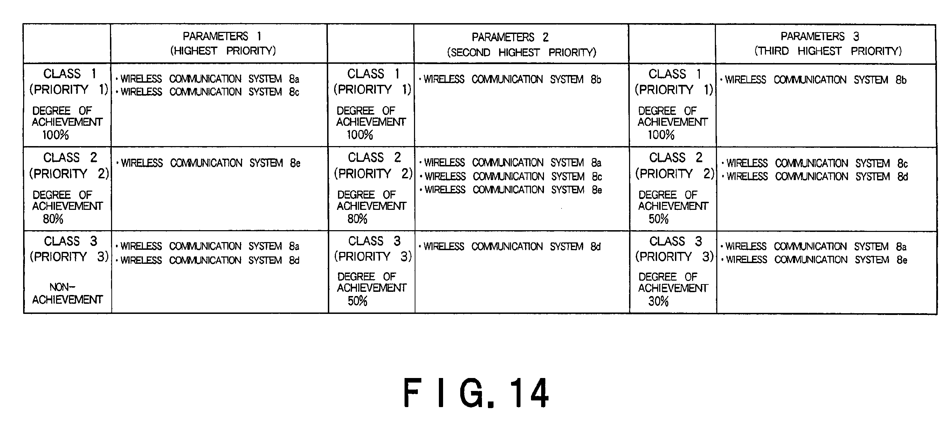

FIG. 14 is a diagram showing an example of a table created by the processing shown in FIG. 13. In FIG. 14, a plurality of wireless communication systems 8 are classified into classes in accordance with a degree of achievement for the parameter 1 having the highest degree. Wireless communication systems 8a and 8c having an achievement degree of 100% for the parameter 1 are classified into the class 1. A wireless communication system 8e having an achievement degree of 80% for the parameter 1 is classified into the class 2. Wireless communication systems 8b and 8d in which the parameter 1 cannot be achieved are classified into the class 3. Since the parameter 1 cannot be achieved, the wireless communication systems 8b and 8d belonging to the class 3 are not selected in any case as candidates for selection of a wireless communication system 8. Furthermore, in accordance with an achievement degree for the parameter 2 having the second highest priority, the wireless communication system 8b having an achievement degree of 100% for the parameter 2 is classified into the class 1, and the wireless communication systems 8a, 8c and 8e having an achievement degree of 80% for the parameter 2 are classified into the class 2, whereas the wireless communication system 8d having an achievement degree of 50% for the parameter 2 is classified into the class 3. In addition, in accordance with an achievement degree for the parameter 3 having the third highest priority, the wireless communication system 8b having an achievement degree of 100% for the parameter 3 is classified into the class 1, and the wireless communication systems 8c and 8d having an achievement degree of 50% for the parameter 3 are classified into the class 2, whereas the wireless communication systems 8a and 8e having an achievement degree of 30% for the parameter 3 is classified into the class 3.

In selecting a wireless communication system 8 to be used, first, the wireless communication systems 8a and 8c belonging to the class 1 having the highest priority become candidates for selection according to the classification 1 based on the parameter 1 having the highest priority. The wireless communication systems 8b and 8d belonging to the class 3 do not become candidates for selection of the wireless communication systems 8 in any case. Subsequently, according to the classification based on the parameter 2 having the second highest priority, the wireless communication systems 8a and 8c are classified into class 2. Therefore, a wireless communication system 8 to be used is not determined at this stage. According to the classification based on the parameter 3 having the third highest priority, the wireless communication system 8c is classified into the class 2 and the wireless communication system 8a is classified into the class 3. Therefore, the wireless communication system 8c, which belongs to the same class 1 as the wireless communication system 8a on the basis of the parameter 1 having the highest priority and the parameter 2 having the second highest priority, but belongs to the class 2 having a higher priority on the basis of the parameter 3 having the third highest priority, is selected as a wireless communication system 8c to be used.

By thus classifying a plurality of wireless communication systems 8 into classes by taking achievement degrees for the parameters as criteria, detailed classification of the wireless communication systems 8 is conducted. It becomes possible to select a more optimum wireless communication system 8.

An example in which a wireless communication system 8 to be used is selected on the basis of the classification based on achievement degrees of the three parameters provided with a priority order has been described. However, it is not necessary that the number of parameters is always three. A wireless communication system 8 to be used may also be selected on the basis of classification based on the criteria of at least four or at most two parameters provided with a priority order. An example in which wireless communication systems 8 are classified into three classes for each parameter has been described. However, it is not always necessary that wireless communication systems 8 are classified into three classes, but the number of classes may be greater or less than three.

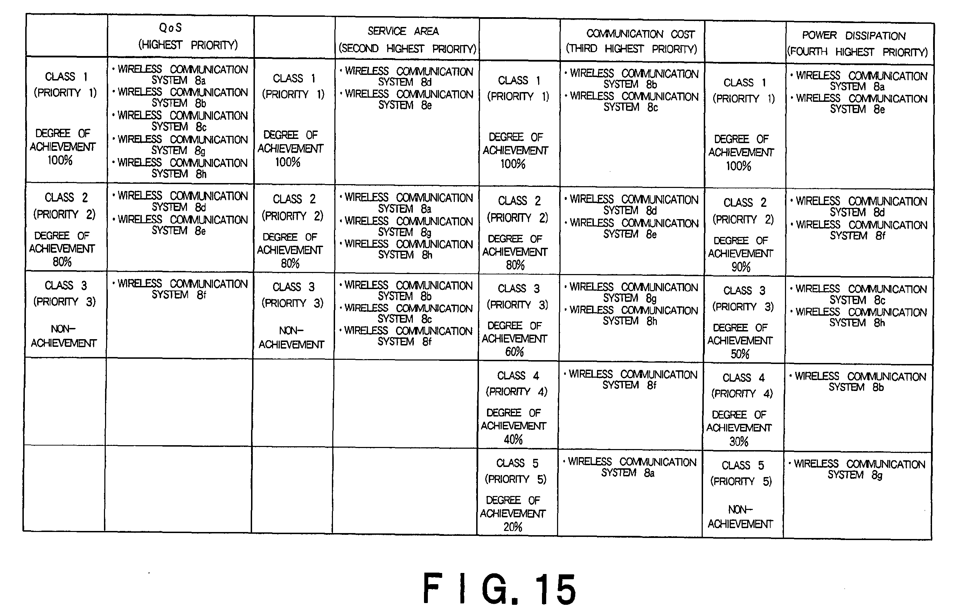

Hereafter, a concrete example of the fourth embodiment will be described. FIG. 15 shows an example of a table in which eight wireless communication systems 8a to 8h are classified into five classes by using the communication quality (QoS) as the parameter 1 having the highest priority, the service area as the parameter 2 having the second highest priority, the communication cost as the parameter 3 having the third highest priority and power dissipation as the parameter 4 having the fourth highest priority.

In FIG. 15, wireless communication systems 8a, 8b, 8c, 8g and 8h having an achievement degree of 100% are classified into class 1, wireless communication systems 8d and 8e having an achievement degree of 80% are classified into class 2, and a wireless communication system 8f, in which the parameter of QoS cannot be achieved, is classified into class 3, on the basis of the achievement degree for the QoS, which is the parameter having the highest priority. Since the parameter of QoS cannot be achieved, the wireless communication system 8f belonging to the class 3 is not selected in any case as a candidate for selection of a wireless communication system 8. Although the wireless communication systems 8 have been classified into three classes in this example, it is not always necessary that the number of classes is three, but the number of classes may be greater than or less than three.

On the basis of the achievement degree for the service area, which is the parameter having the second highest priority, the wireless communication systems 8d and 8e having an achievement degree of 100% are classified into class 1, the wireless communication systems 8a, 8g and 8h having an achievement degree of 80% are classified into class 2, and the wireless communication systems 8b, 8c and 8f, in which the parameter of the service area cannot be achieved, are classified into class 3. Since the parameter of the service area cannot be achieved, the wireless communication system 8b, 8c and 8f belonging to the class 3 are not selected in any case as candidates for selection of a wireless communication system 8. Although the wireless communication systems 8 have been classified into three classes in this example, it is not always necessary that the number of classes is three, but the number of classes may be greater than or less than three.

Subsequently, on the basis of the achievement degree for the communication cost, which is the parameter having the third highest priority, the wireless communication systems 8b and 8c having an achievement degree of 100% are classified into class 1, the wireless communication systems 8d and 8e having an achievement degree of 80% are classified into class 2, whereas the wireless communication systems 8g and 8h having an achievement degree of 60% are classified into class 3, the wireless communication system 8f having an achievement degree of 40% is classified into class 4, and the wireless communication system 8a having an achievement degree of 20% is classified into class 5. Although the wireless communication systems 8 have been classified into five classes in this example, it is not always necessary that the number of classes is five, but the number of classes may be greater than or less than five.

In addition, on the basis of the achievement degree for the power dissipation, which is the parameter having the fourth highest priority, the wireless communication systems 8a and 8e having an achievement degree of 100% are classified into class 1, the wireless communication systems 8d and 8f having an achievement degree of 90% are classified into class 2, and the wireless communication systems 8c and 8h having an achievement degree of 50% are classified into class 3, whereas the wireless communication system 8b having an achievement degree of 30% is classified into class 4, and the wireless communication system 8g, in which the parameter of the power dissipation cannot be achieved, is classified into class 5. Since the parameter of the power dissipation cannot be achieved, the wireless communication system 8g belonging to the class 5 is not selected in any case as a candidate for selection of a wireless communication system 8. Although the wireless communication systems 8 have been classified into five classes in this example, it is not always necessary that the number of classes is five, but the number of classes may be greater than or less than three.

A processing procedure conducted by the selector 18 in the fourth embodiment is similar to the flow chart shown in FIG. 12. In selecting a wireless communication system 8 to be used, first, the wireless communication systems 8a, 8b, 8c, 8g and 8h belonging to the class 1 having the highest priority become candidates for selection according to the classification based on the criterion of QoS, which is the parameter having the highest priority.

Subsequently, according to the classification based on the service area, which is the parameter having the second highest priority, the wireless communication systems 8a, 8g and 8h are classified into the class 2, and the wireless communication systems 8b and 8c are classified into the class 3. Therefore, the wireless communication systems 8a, 8g and 8h, which belong to the same class 1 as the wireless communication systems 8b and 8c on the basis of the parameter of QoS having the highest priority, but belongs to the class 2 having a higher priority classified on the basis of the parameter of the service area having the second highest priority, remain as the candidates for selection.

Subsequently, according to the classification based on the communication cost, which is the parameter having the third highest priority, the wireless communication systems 8g and 8h are classified into the class 3, and the wireless communication system 8a is classified into the class 5. Therefore, the wireless communication systems 8g and 8h, which belong to the same class 1 as the wireless communication system 8a on the basis of the parameter of the service area having the second highest priority, but belongs to the class 3 having a higher priority classified on the basis of the parameter of the communication cost having the third highest priority, remain as the candidates for selection. And, according to the classification based on the power dissipation, which is the parameter having the fourth highest priority, the wireless communication system 8h is classified into the class 3, and the wireless communication system 8g is classified into the class 5, for which the parameter of the power dissipation cannot be achieved. The wireless communication system 8h belongs to the same class 3 as the wireless communication system 8g on the basis of the parameter of the communication cost having the third highest priority. However, in the wireless communication system 8g, the parameter of the power dissipation having the fourth priority cannot be achieved. Therefore, the wireless communication system 8g is eliminated from the candidates for selection of a wireless communication system 8. As a result, the wireless communication system 8h is selected as the wireless communication system 8 to be used.

Even if, for example, the wireless communication system 8h selected as the wireless communication system 8 to be used degrades in communication quality and handover to another wireless communication system 8 is to be conducted, the wireless communication system 8g, for which the parameter of the power dissipation cannot be achieved, does not become a candidate for the wireless communication system 8 of handover destination.

Thus, in the fourth embodiment, a wireless communication system 8 is selected according to the classification based on the criteria of achievement degrees respectively for the parameters 1 to 4 provided with a priority order. Therefore, it becomes possible to select an optimum wireless communication system 8 according to more detailed criteria satisfying a plurality of parameters.

An example in which a wireless communication system 8 to be used is selected on the basis of the classification based on the achievement degrees for the four parameters, i.e., the QoS, service area, communication cost and power dissipation provided with a priority order has been described. However, it is not necessary that the criteria for classification are always achievement degrees for the parameters, but a wireless communication system 8 to be used may also be selected according to classification based on other criteria.

### (Fifth Embodiment)

In the fifth embodiment, classification is conducted for every a plurality of applications (communication types).

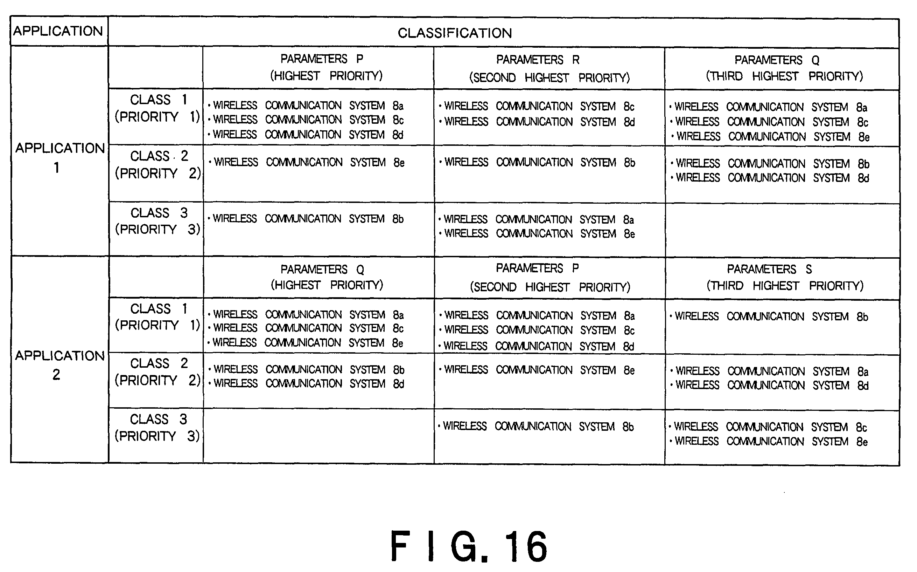

A wireless communication apparatus according to the fifth embodiment has a configuration similar to that shown in FIG. 1. FIG. 16 is a diagram showing an example of a table created by the classification unit 16. In the case of an application 1 show in FIG. 16, wireless communication systems 8a to 8e are classified into classes on the basis of criteria of a parameter P having the highest priority, a parameter R having the second highest priority, and a parameter Q having the third highest priority. In the case of an application 2, wireless communication systems 8a to 8h are classified into classes on the basis of criteria of the parameter Q having the highest priority, the parameter P having the second highest priority, and a parameter S having the third highest priority.

In the case of the application 1, wireless communication systems 8c and 8d, which belong to the class having the highest priority as a result of classification based on the criteria of the parameter P having the highest priority and the parameter R having the second highest priority, become candidates for selection of a wireless communication system 8. In the classification based on the criterion of the parameter Q having the third highest priority, the wireless communication system 8c belongs to class 1 having the highest priority, whereas the wireless communication system 8d belongs to class 2 having the second highest priority. Finally, therefore, the wireless communication system 8c is selected as the wireless communication system 8 to be used.

In the case of the application 2, the wireless communication systems 8a and 8c, which belong to the class having the highest priority as a result of classification based on the criteria of the parameter Q having the highest priority and the parameter P having the second highest priority, become candidates for selection of a wireless communication system 8. In the classification based on the criterion of the parameter S having the third highest priority, the wireless communication system 8a belongs to the class 2 having the second highest priority, whereas the wireless communication system 8c belongs to class 3 having the third highest priority. Finally, therefore, the wireless communication system 8a is selected as the wireless communication system 8 to be used.

By thus changing parameters or the priority order of parameters, it becomes possible to select an optimum wireless communication system 8 according to the application. An example in which a wireless communication system 8 to be used for every application is selected according to the classification based on the criteria of three parameters provided with a priority order has been described. However, it is not necessary that the number of parameters is always three. A wireless communication system 8 to be used may also be selected according to the classification based on the criteria of at least four or at most two parameters provided with a priority order.

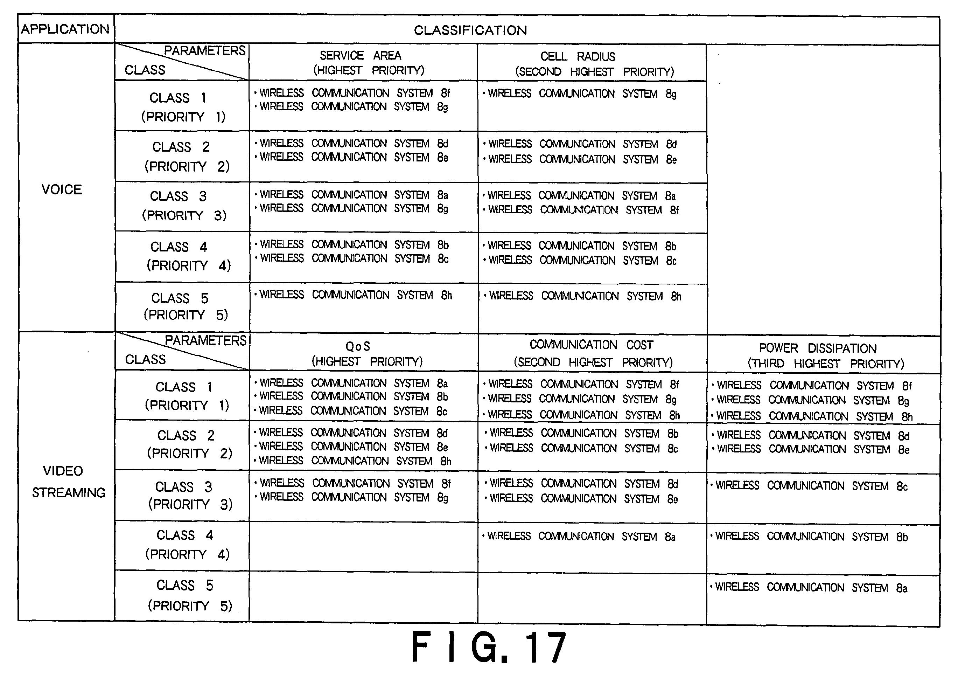

Hereafter, a concrete example of the fifth embodiment will be described. FIG. 17 shows an example of a table in which eight wireless communication systems 8a to 8h are classified into five classes by using voice as the application 1, and using video streaming as the application 2. In the case where the application is voice, the service area is used as a parameter having the highest priority, and a cell radius is used as a parameter having the second highest priority. In the case where the application is video streaming, QoS is used as a parameter having the highest priority, a communication cost is used as a parameter having the second highest priority, and power dissipation is used as a parameter having the third highest priority.

If the application is voice and, for example, talking is conducted while moving, then it is desirable to talk in a wide area and avoid handover in the system as far as possible. In FIG. 17, therefore, the service area is taken as a parameter having the highest priority, and a cell radius is taken as a parameter having the second highest priority. The wireless communication systems 8a to 8h are classified into classes on the basis of the criteria of those parameters. On the other hand, if the application is video streaming, then for example, stationary reception is conducted, but the transmission data size is large, and it is desirable to conduct reception for a long time at a low cost. Therefore, QoS is taken as a parameter having the highest priority, a communication cost is taken as a parameter having the second highest priority, and power dissipation is taken as a parameter having the third highest priority. The wireless communication systems 8a to 8h are classified into classes on the basis of the criteria of those parameters.

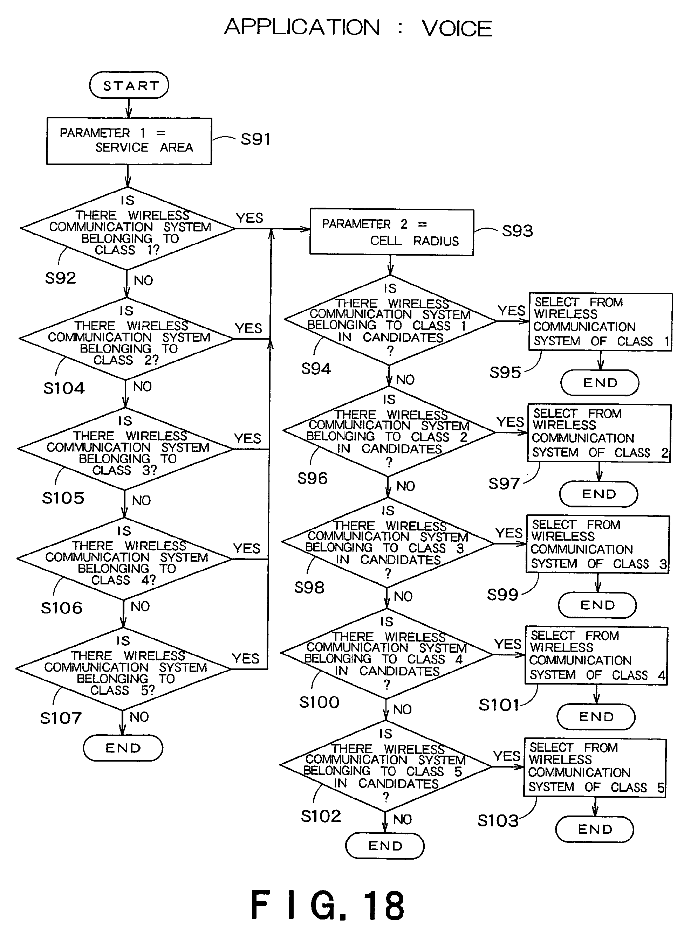

FIG. 18 is a flow chart showing a processing procedure conducted by the selector 18 to select a wireless communication system 8 on the basis of the table shown in FIG. 17 when the application is voice. First, the service area is set as the parameter 1 (step S91). Subsequently, it is determined whether a wireless communication system 8 belonging to the class 1 is present (step S92). If such a wireless communication system 8 is present, then the cell radius is set as the parameter 2 (step S93). Subsequently, it is determined whether a wireless communication system 8 belonging to the class 1 is present in the candidates (step S94). If such a wireless communication systems 8 is present, then one is selected from the wireless communication systems 8 belonging to the class 1 (step S95).

If it is determined at the step S94 that a wireless communication system 8 belonging to the class 1 is not present, then it is determined whether a wireless communication system 8 belonging to the class 2 is present in candidates (step S96). If such a wireless communication systems 8 is present, then one is selected from the wireless communication systems 8 belonging to the class 2 (step S97).

If it is determined at the step S96 that a wireless communication system 8 belonging to the class 2 is not present, then it is determined whether a wireless communication system 8 belonging to the class 3 is present in candidates (step S98). If such a wireless communication systems 8 is present, then one is selected from the wireless communication systems 8 belonging to the class 3 (step S99). If it is determined at the step S98 that a wireless communication system 8 belonging to the class 3 is not present, then it is determined whether a wireless communication system 8 belonging to the class 4 is present in candidates (step S100). If such a wireless communication systems 8 is present, then one is selected from the wireless communication systems 8 belonging to the class 4 (step S101).

If it is determined at the step S100 that a wireless communication system 8 belonging to the class 4 is not present, then it is determined whether a wireless communication system 8 belonging to the class 5 is present in candidates (step S102). If such a wireless communication systems 8 is present, then one is selected from the wireless communication systems 8 belonging to the class 5 (step S103).

If it is determined at the step S92 that a wireless communication system 8 belonging to the class 1 is not present, then it is determined whether a wireless communication system 8 belonging to the class 2 is present in candidates (step S104). If such a wireless communication systems 8 is present, then the above-described processing of the steps S93 to S103 is conducted.

If it is determined at the step S104 that a wireless communication system 8 belonging to the class 2 is not present, then it is determined whether a wireless communication system 8 belonging to the class 3 is present in candidates (step S105). If such a wireless communication systems 8 is present, then the above-described processing of the steps S93 to S103 is conducted.

If it is determined at the step S105 that a wireless communication system 8 belonging to the class 3 is not present, then it is determined whether a wireless communication system 8 belonging to the class 4 is present in candidates (step S106). If such a wireless communication systems 8 is present, then the above-described processing of the steps S93 to S103 is conducted.

If it is determined at the step S106 that a wireless communication system 8 belonging to the class 4 is not present, then it is determined whether a wireless communication system 8 belonging to the class 5 is present in candidates (step S107). If such a wireless communication systems 8 is present, then the above-described processing of the steps S93 to S103 is conducted.

The processing shown in FIG. 18 is conducted by using the table shown in FIG. 17. If the application is voice , then the wireless communication systems 8f and 8g belonging to the class having the highest priority in classification based on the criterion of the service area, which is the parameter having the highest priority, become candidates for selection of a wireless communication system 8. In the classification based on the criterion of the cell radius, which is the parameter having the second highest priority, the wireless communication system 8g belongs to the class 1 having the highest priority, whereas the wireless communication system 8f belongs to the class 3 having the third highest priority. Finally, therefore, the wireless communication system 8g is selected as a wireless communication system 8 to be used.

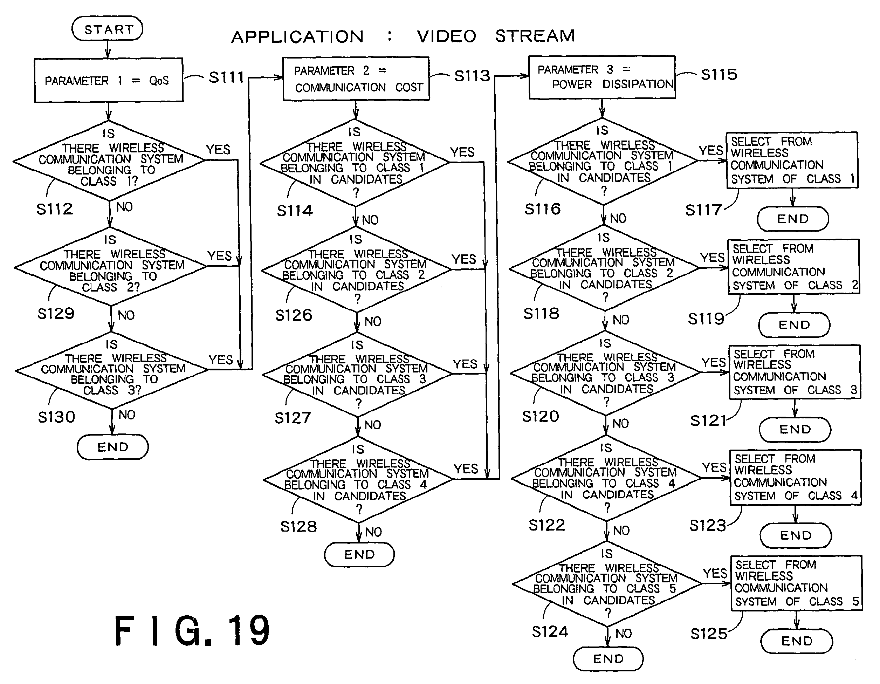

FIG. 19 is a flow chart showing a processing procedure conducted by the selector 18 to select a wireless communication system 8 on the basis of the table shown in FIG. 17 when the application is video streaming. The processing in this flow chart is the same as that shown in FIG. 18, and consequently its detailed description will be omitted.

If the application is video streaming as shown in FIG. 19, then the wireless communication systems 8b and 8c belonging to the class having the highest priority in classification based on the criterion of the communication quality (QoS), which is the parameter having the highest priority, and belonging to the class 2 having the second highest priority in classification based on the criterion of the communication cost, which is the parameter having the second highest priority, become candidates for selection of a wireless communication system 8. In the classification based on the criterion of the power dissipation, which is the parameter having the third highest priority, the wireless communication system 8c belongs to the class 3 having the third highest priority, whereas the wireless communication system 8b belongs to the class 4 having the fourth highest priority. Finally, therefore, the wireless communication system 8c is selected as a wireless communication system 8 to be used.

Thus, in the fifth embodiment, it becomes possible to select an optimum wireless communication system 8 according to the application by changing the parameters or the priority order of parameters.

### (Sixth Embodiment)

In the sixth embodiment, a plurality of wireless communication systems 8 are classified into a plurality of classes on the basis of degrees of adaptation of wireless communication systems for parameters.

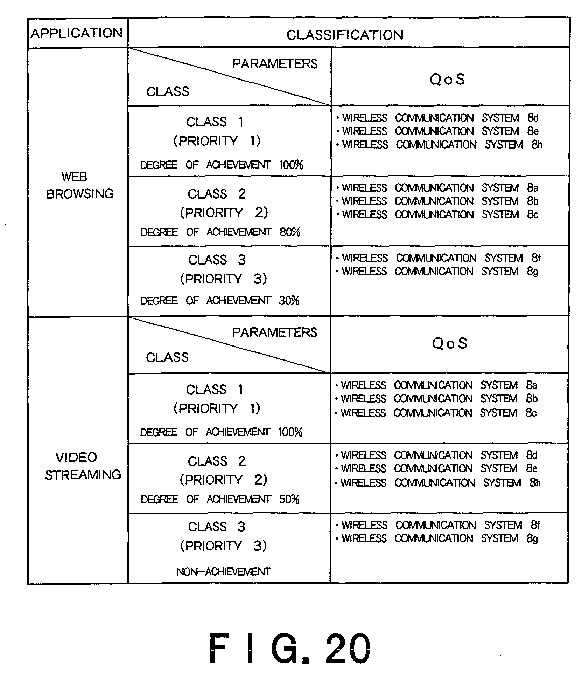

A wireless communication apparatus of the sixth embodiment has a configuration similar to that shown in FIG. 1. FIG. 20 is a diagram showing an example of a table created by the classification unit 16. For the case where the application is web browsing and for the case where the application is video streaming, a plurality of wireless communication systems 8 are classified into classes in the table on the basis of an adaptation degree of the parameter of the communication quality (QoS).

If the application is web browsing and most transmitted information is a text and still images, the necessary information transmission rate can be lowered as compared with that in the video streaming. When the application is web browsing, therefore, wireless communication systems 8d, 8e and 8h shown in FIG. 20, which can satisfy the communication quality (QoS) of still image transmission and provide a communication quality (QoS) without a surplus or deficiency for the communication quality (QoS) of still image transmission, belong to class 1 having the highest priority. Wireless communication systems 8a, 8b and 8c, which satisfy the communication quality (QoS) of still image transmission, but provide an excessive communication quality (QoS) for the communication quality (QoS) of still image transmission, belong to class 2 having the second highest priority. Wireless communication systems 8f and 8g, which cannot satisfy the communication quality (QoS) required for 100% of still image transmission, but can satisfy it approximately 30%, belong to class 3 having the lowest priority.

On the other hand, when the application is video streaming transmission, wireless communication systems 8a, 8b and 8c, which can satisfy the communication quality (QoS) required for video streaming transmission, and provide a communication quality (QoS) without a surplus or deficiency for the communication quality (QoS) of video streaming transmission, belong to class 1 having the highest priority. Wireless communication systems 8d, 8e and 8h, which cannot satisfy the communication quality (QoS) required for 100% of video streaming transmission, but can satisfy it approximately 50%, belong to class 2 having the second highest priority. Wireless communication systems 8f and 8g, which cannot satisfy the communication quality (QoS) required for video streaming transmission, belong to class 3 having the lowest priority.

When the application is video streaming transmission, the wireless communication systems 8f and 8g belonging to the class 3 classified as non-adaptive for the parameter of the communication quality (QoS) are not selected in any case as candidates for selection of a wireless communication system 8.

Thus, in the sixth embodiment, it becomes possible to utilize the wireless resources of the whole wireless communication system 8 efficiently, by changing the priority order of classification of the wireless communication system 8 or the criteria of the parameters, according to the application to be used even for the same parameters.

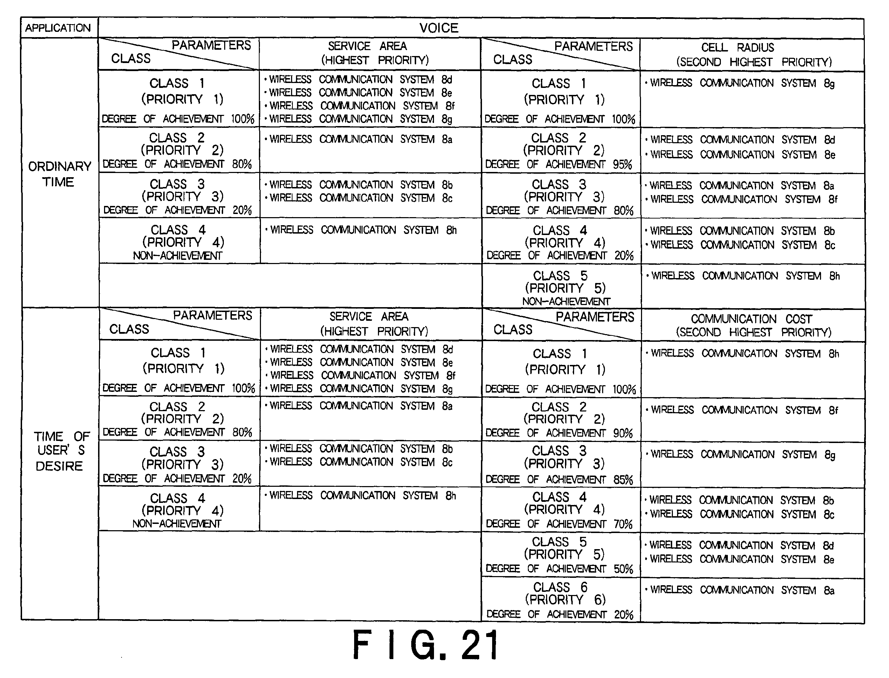

An example in which the classification of the parameters or the criteria of the parameters is changed according to a user's request will now be described. FIG. 21 is a diagram showing a table obtained by classifying a plurality of wireless communication systems 8 into classes on the basis of the adaptation degree of a parameter when the application is voice. The table in FIG. 21 shows classification conducted at the ordinary time and classification conducted at the time of the user's desire. It is now supposed that the wireless communication apparatus can conduct communication by using eight wireless communication systems 8, i.e., wireless communication systems 8a to 8h in the same way as the first embodiment.

At the ordinary time, the wireless communication systems 8 are classified into classes on the basis of adaptation degrees of a parameter of the service area having the highest priority and a parameter of the cell radius having the second highest priority. It is now supposed that the wireless communication system 8g belonging to the class having the highest priority in these parameters has been selected and used, but communication with a lower communication cost is desired by the user.

It is now supposed that in this case a wireless communication system 8 to be used is selected by using a parameter of the communication cost instead of the parameter of the cell radius as the parameter having the second highest priority. In classification based on adaptation degrees of the parameter of the service area having the highest priority and the parameter of the communication cost having the second highest priority, the wireless communication system 8f belonging to classes having the highest priority is selected as a wireless communication system 8 to be used.

Thus, even for the same application, it becomes possible to select an optimum wireless communication system 8 according to the user's desire, by changing the priority order of the parameters.

An example in which the classification of the parameters or the criteria of the parameters is changed according to the state of the terminal will now be described.

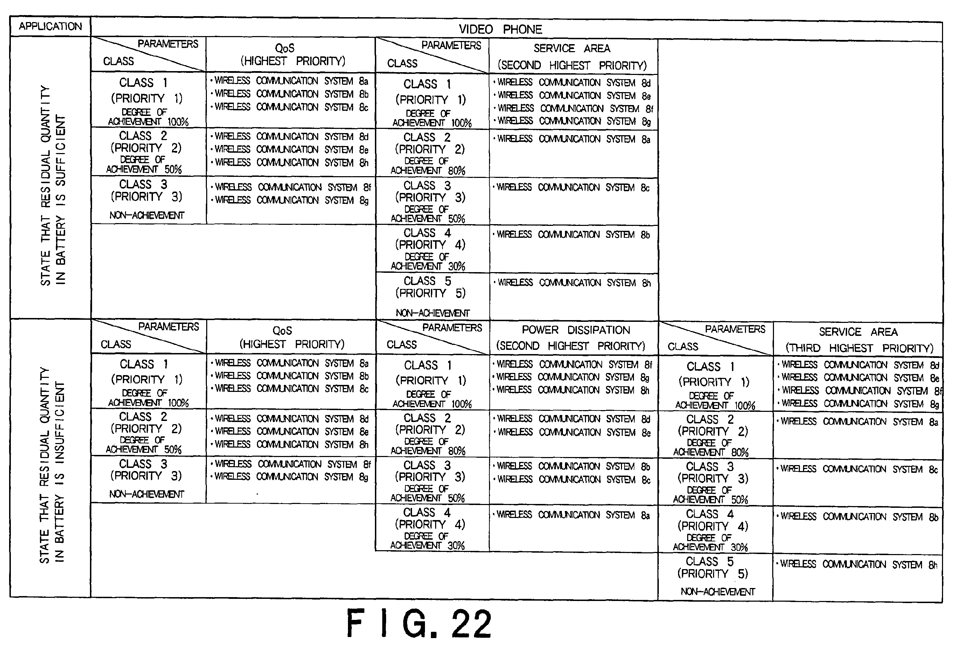

FIG. 22 shows a table in the case where the application is videophone. In the table shown in FIG. 22, a plurality of wireless communication systems 8 are classified into classes on the basis of adaptation degrees of parameters in a state in which the residual quantity in the battery in the terminal is sufficient and in a state in which the residual quantity in the battery in the terminal is small. It is now supposed that the wireless communication apparatus can conduct communication by using the eight wireless communication systems 8, i.e., the wireless communication systems 8a to 8h in the same way as the first embodiment.

It is supposed that if the residual quantity in the battery is sufficient the wireless communication system 8 to be used is selected by using the parameter of the communication quality (QoS) as the parameter having the highest priority and the parameter of the service area as the parameter having the second highest priority. By classifying the wireless communication systems 8 into classes on the basis of adaptation degrees of these parameters as shown in FIG. 22, the wireless communication system 8a belonging to classes having higher priorities is selected as the wireless communication system 8 to be used.

Subsequently, it is supposed that in the case where the residual quantity in the battery is small the wireless communication system 8 to be used is selected by using a parameter of power dissipation instead of the parameter of the service area, and adding a parameter of the service area as a parameter having the third highest priority. By classifying the wireless communication systems 8 into classes on the basis of adaptation degrees of these parameters as shown in FIG. 22, the wireless communication system 8c belonging to classes having higher priorities is selected as the wireless communication system 8 to be used, instead of the wireless communication system 8a selected when the residual quantity in the battery is sufficient.

Thus, in the sixth embodiment, it becomes possible to select an optimum wireless communication system 8 according to the terminal state, by changing the priority order of the parameters according to the situation of use.

### (Seventh Embodiment)

In a seventh embodiment, it is attempted to prevent the communication quality from being degraded even if the user's state changes as in the mobile environment.

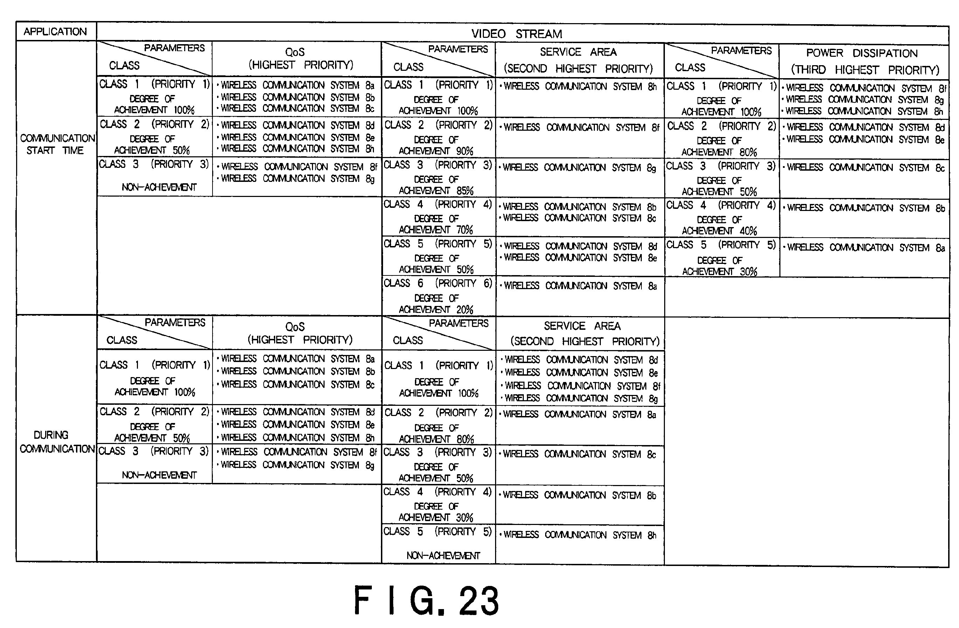

A wireless communication apparatus of the seventh embodiment has a configuration similar to that shown in FIG. 1. FIG. 23 is a diagram showing an example of a table obtained by classifying a plurality of wireless communication systems 8 into classes on the basis of adaptation degrees of parameters at the time of communication start and during communication, in the case where the application is video streaming.

It is now assumed that at the time of communication start a wireless communication system 8 is selected by using a parameter of the communication quality (QoS) as a parameter having the highest priority, a parameter of the communication cost as a parameter having the second highest priority, and a parameter of the power dissipation as a parameter having the third highest priority. By classifying the wireless communication systems 8 into classes on the basis of adaptation degrees of these parameters as shown in FIG. 23, the wireless communication system 8c belonging to classes having higher priorities is selected as the wireless communication system 8 to be used.

When the communication is started, the user receives service of video streaming in the stationary state. However, the user starts movement while the user is continuing to receive service of video streaming. For example, the wireless communication system 8c is a wireless communication system 8 having a comparatively narrow service area, such as a local area network. Therefore, it is now supposed that the user gets out of the service area of the wireless communication system 8c as the user moves and consequently the communication quality has degraded. It is supposed that in this case a wireless communication system 8 of handover destination has been selected by using a parameter of the service area as the parameter having the second highest priority instead of the parameter of the communication cost. By classifying the wireless communication systems 8 into classes on the basis of adaptation degrees of these parameters as shown in FIG. 23, the wireless communication system 8a belonging to classes having higher priorities is selected as the wireless communication system 8 to be used, instead of the wireless communication system 8c selected at the time of communication start.

Thus, in the seventh embodiment, the parameters during the communication are changed from those at the time of communication start. Even if the user's state has changed, therefore, it becomes possible to select an optimum wireless communication system 8 that does not degrade the communication quality.

### (Eighth Embodiment)

In the eighth embodiment, switching of the wireless communication system 8 is conducted by taking the compatibility of the wireless communication systems 8 into consideration.

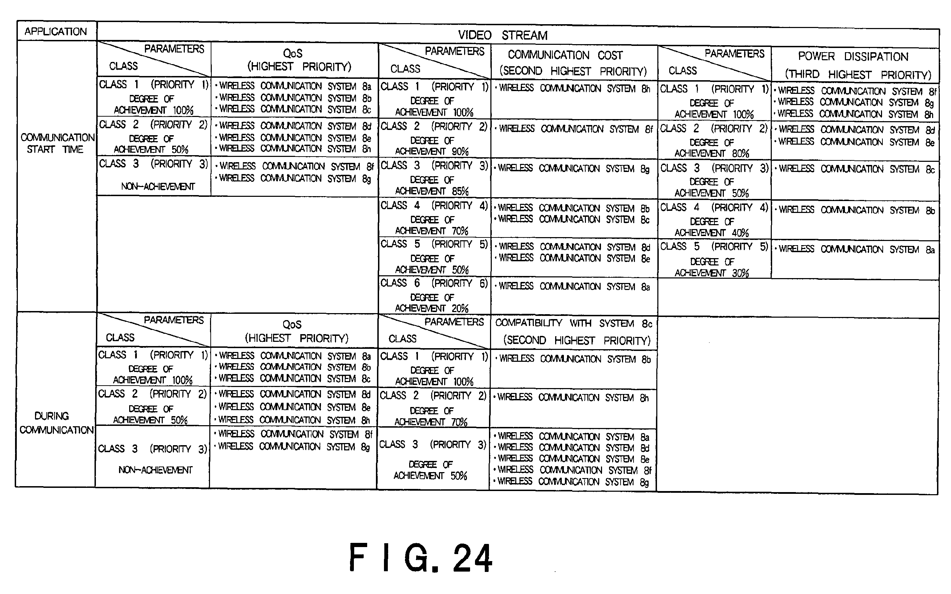

A wireless communication apparatus of the eighth embodiment has a configuration similar to that shown in FIG. 1. FIG. 24 is a diagram showing an example of a table obtained by classifying a plurality of wireless communication systems 8 into classes on the basis of adaptation degrees of parameters at the time of communication start and during communication, in the case where the application is video streaming.

It is now assumed that at the time of communication start a wireless communication system 8 is selected by using a parameter of the communication quality (QoS) as a parameter having the highest priority, a parameter of the communication cost as a parameter having the second highest priority, and a parameter of the power dissipation as a parameter having the third highest priority. By classifying the wireless communication systems 8 into classes on the basis of adaptation degrees of these parameters as shown in FIG. 24, the wireless communication system 8c belonging to classes having higher priorities is selected as the wireless communication system 8 to be used.

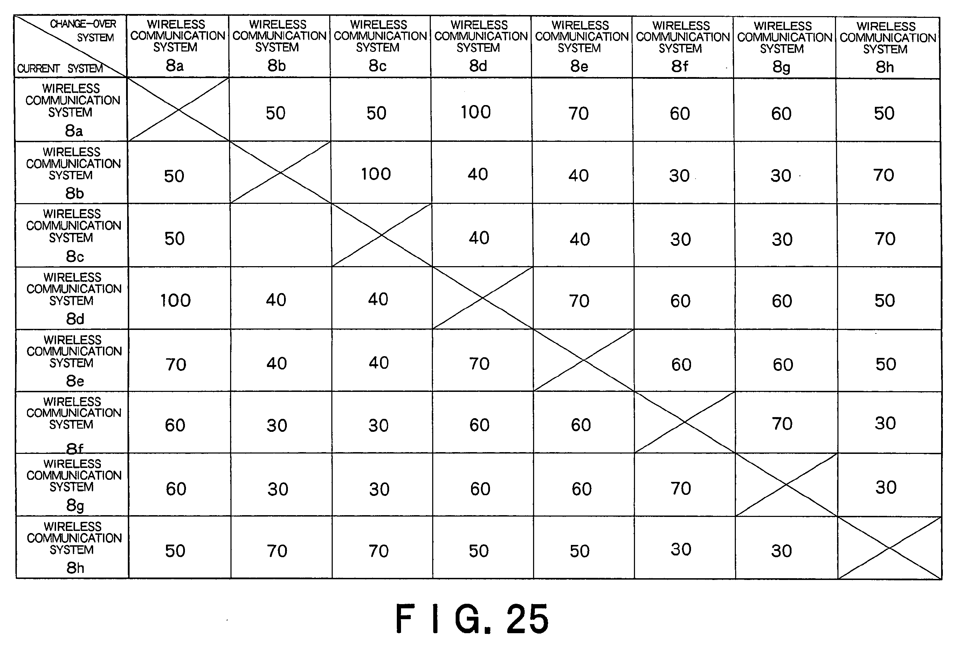

It is now assumed that video streaming transmission was conducted by using the wireless communication system 8c, but the communication quality of the wireless communication system 8c is degraded by interference with another wireless communication system and the video streaming transmission has become difficult. In order to conduct handover to another wireless communication system 8, therefore, a wireless communication system 8 of handover destination must be selected. In order to hold down an image break caused in video streaming transmission by system switching to the minimum as far as possible, however, the network must be switched in a moment. The system switching can be conducted faster by conducting selection on the wireless communication system 8c, which is currently used for communication, and a wireless communication system 8b having high network compatibility. Accordingly, a table in which adaptation degrees of mutual switching among wireless communication systems 8 have been registered by taking network compatibility among the wireless communication systems 8 into consideration is prepared as shown in FIG. 25. FIG. 25 is a table showing to what degree another wireless communication system 8 is suitable for the currently selected wireless communication system 8c as a wireless communication system 8 of handover destination, by taking network compatibility among wireless communication systems 8 into consideration.

It is now supposed that a wireless communication system 8 of handover destination is selected by using a parameter of compatibility with the currently selected wireless communication system 8c instead of the parameter of the communication cost as a parameter having the second highest parameter. The wireless communication systems 8 are classified into classes as shown in FIG. 24 by using the table shown in FIG. 25 and using the compatibility with the currently selected wireless communication system 8c as a parameter. By ensuring the communication quality (QoS) of the video streaming transmission and selecting a wireless communication system 8 of handover destination with priority given to the easiness of network switching, a wireless communication system 8b belonging to a class having a higher priority is selected as a wireless communication system to be used, instead of the wireless communication system 8c selected at the time of communication start.

Thus, in the eighth embodiment, information relating to the wireless communication system 8 currently used for communication, such as the network compatibility, is selected as a parameter. Therefore, switching between systems can be conducted rapidly and without a trouble.

### (Ninth Embodiment)

In the ninth embodiment, weights of respective parameters are set for each of a plurality of wireless communication systems.

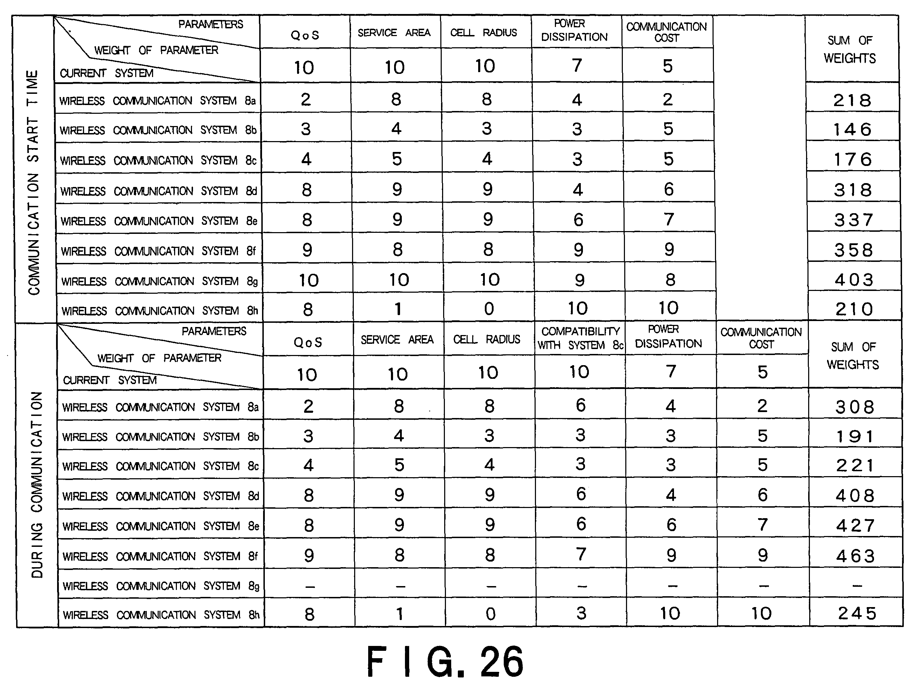

A wireless communication apparatus of the ninth embodiment has a configuration similar to that shown in FIG. 1. FIG. 26 shows a table obtained when the application is voice by providing a plurality of wireless communication systems 8 respectively with weights on the basis of adaptation degrees for respective parameters and providing the parameters as well with weights on the basis of the priority order, for "at the time of communication start" and "during communication."

In the table shown in FIG. 26, a weight provided for each wireless communication system 8 with respect to one parameter is multiplied by a weight provided for the parameter to yield a product, and the products are added up for all parameters. A sum total of weights for all considered parameters are thus calculated for each wireless communication system 8.

It is now supposed that, for example, the residual quantity in a battery in a terminal is still sufficient when selecting a wireless communication system 8 to be used, at the time of communication start and there is a request for maintaining the quality of voice even at the sacrifice of the communication cost. For example, therefore, it is supposed that a weight 10 is provided for a parameter of the communication quality (QoS), a weight of 10 for a parameter of the service area, a weight of 10 for a parameter of the cell radius, a weight of 7 for a parameter of the power dissipation, and a weight of 5 for a parameter of the communication cost. For a plurality of wireless communication systems 8, a weight provided on the basis of an adaptation degree of a parameter is multiplied by a weight of the parameter itself to yield a product and resultant products are added up. As a result, a wireless communication system 8g having the largest weight is selected as a wireless communication system 8 to be used. In this example, five parameters have been taken into consideration when selecting a wireless communication system 8 to be used. However, it is not necessary that the number of the parameters taken into consideration is always five, but the number of the parameters may be greater than or less than five.

Subsequently, it is supposed that during the communication a candidate for the wireless communication system 8 of handover destination is selected by way of precaution against system switching caused by, for example, degradation in the communication quality of the wireless communication system 8g. It is supposed that in addition to the above-described five parameters the compatibility with the currently used wireless communication system 8g is taken into consideration as a parameter. For example, considering that the system switching must be conducted in a moment because the application is voice , a weight 10 is assigned to the parameter of the compatibility with the wireless communication system 8g. For each of the wireless communication systems 8 other than the wireless communication system 8g, a weight provided on the basis of an adaptation degree of each of the parameters is multiplied by the parameter itself to yield a product, and resultant products are added up. As a result, a wireless communication system 8f having the largest weight is selected as a wireless communication system 8 of handover destination.

Thus, in the ninth embodiment, a weight is provided for each of combinations of the wireless communication systems 8 and the parameters, and a weight is provided for each of the parameters. As a result, it becomes possible to set more detailed parameters, and it becomes possible to select an optimum wireless communication system 8 definitely.

### (Tenth Embodiment)

In the tenth embodiment, unnecessary switching of the wireless communication systems 8 is prevented.

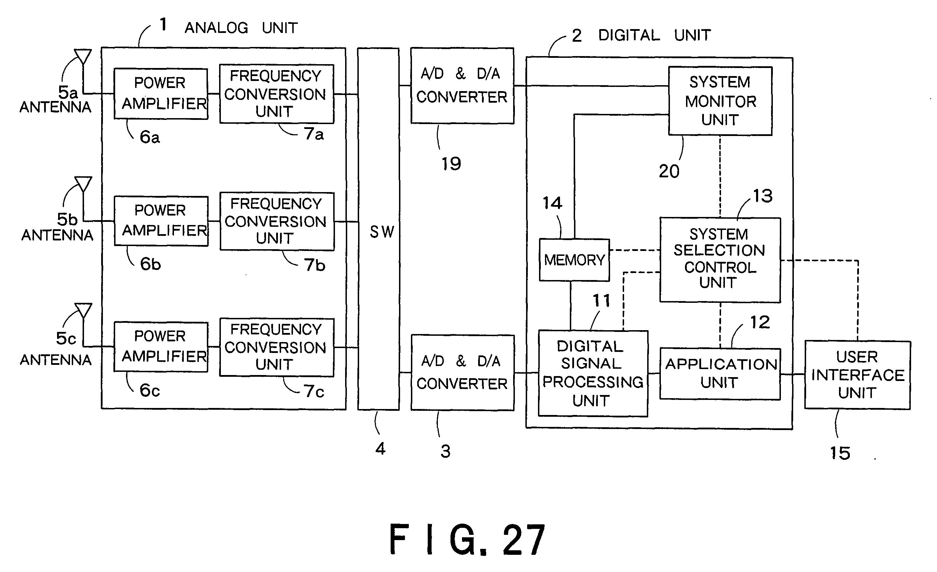

FIG. 27 is a block diagram showing a schematic configuration according to a tenth embodiment of a wireless communication apparatus of the present invention. The wireless communication apparatus shown in FIG. 27 includes an A/D & D/A converter 19 dedicated to a monitor and a system monitor unit 20 provided in the digital unit 2, besides the configuration of the wireless communication apparatus shown in FIG. 1. The system monitor unit 20 monitors at least one of operation states of wireless communication systems other than a wireless communication system selected by the system selection control unit 13 and available channel information of wireless communication systems other than the selected wireless communication system.

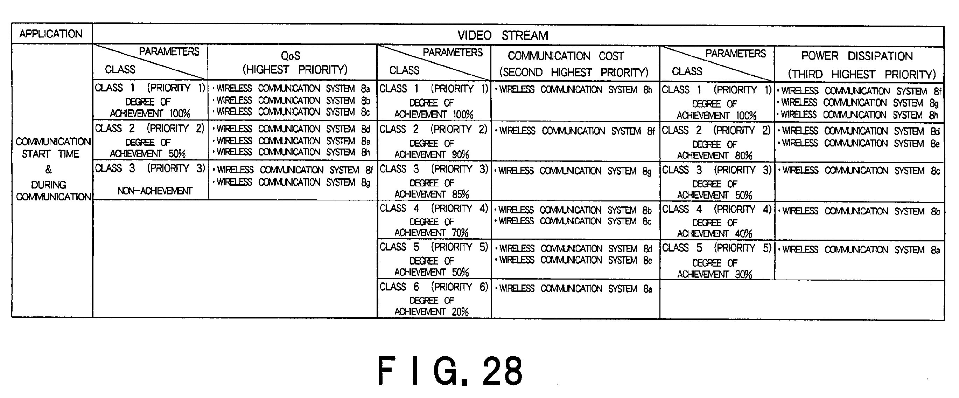

FIG. 28 shows a table in which a plurality of wireless communication systems 8 are classified into classes on the basis of adaptation degrees for parameters for "at the time of communication start" and "during the communication" when the application is video streaming. In this table, a specific parameter is fixed upon the specific parameter of the communication quality (QoS). While communication is being conducted with one application, system switching is conducted only when the connection condition of the communication quality (QoS) is not satisfied. At the time of communication start and during the communication, the wireless communication system 8 to be used is selected according to this table of classification. It is now supposed that the wireless communication apparatus can conduct communication by using eight wireless communication systems 8, i.e., wireless communication systems 8a to 8h, in the same way as the first embodiment.

It is supposed that at the time of communication start a wireless communication system 8 to be used has been selected by using a parameter of the communication quality (QoS) as a parameter having the highest priority, a parameter of the communication cost as a parameter having the second highest priority, and a parameter of the power dissipation as a parameter having the third highest priority. As shown in FIG. 28, the wireless communication systems 8 are classified into classes on the basis of adaptation degrees of these parameters. As a result, a wireless communication system 8c belonging to classes having higher priorities is selected as a wireless communication system 8 to be used.

It is now assumed that video streaming transmission was conducted by using the wireless communication system 8c, but the communication quality of the wireless communication system 8c is degraded by interference with another wireless communication system and it has become impossible to satisfy the communication quality (QoS) requested for the video streaming transmission. Since the parameter of the communication quality (QoS) is the specific parameter, system switching to another wireless communication system 8 is conducted. Since a wireless communication system 8 belonging to a class having a priority second to the wireless communication system 8c is a wireless communication system 8b as shown in FIG. 28, the wireless communication system 8b is selected and system switching is conducted.

It is supposed that the restoration of the quality of the wireless communication system 8c belonging to the highest class in the classification is found during the communication using the wireless communication system 8b on the basis of monitoring of other systems conducted by the system monitor unit 20 or on the basis of control information supplied from a base station of the wireless communication system 8b. Or it is supposed that occurrence of an empty channel in the wireless communication system 8b has been found by the system monitor unit 20. Since the wireless communication system 8c belongs to the highest classes in the classification, originally handover to the wireless communication system 8c is to be conducted. Since the currently used wireless communication system 8b also satisfies the criterion of the parameter of the communication quality (QoS), which is the specific parameter, however, handover to the wireless communication system 8c is not conducted, but the communication using the wireless communication system 8b is continued.

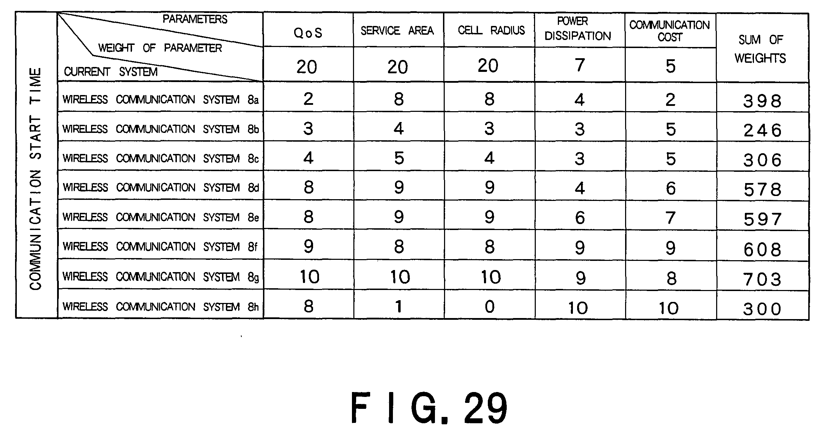

FIG. 29 shows a table obtained when the application is voice by providing a plurality of wireless communication systems 8 respectively with weights on the basis of adaptation degrees for respective parameters and providing the parameters as well with weights on the basis of the priority order, for "at the time of communication start" and "during communication." At the time of communication start and during the communication, the wireless communication system 8 to be used is selected according to this table of weighting. Hereafter, a method for avoiding unnecessary inter-system handover by using this table will be described.

The table shown in FIG. 29 differs from the table shown in FIG. 26 is that the parameter corresponding to the specific parameter described in the present embodiment is assigned an extremely large weight as compared with other parameters. For example, it is now supposed that the residual quantity in the terminal battery is sufficient and there is a request that the quality of the voice should be maintained even at the sacrifice of the communication cost. Therefore, the parameters of the service quality (QoS), service area and cell radius are provided with weights of 20, which are extremely larger than weights for other parameters. In order to select a wireless communication system 8 satisfying these requests, a threshold is set for the sum total of weights for each wireless communication system 8. For example, a threshold for the sum total of weights is set equal to 550. Wireless communication systems 8 having a sum total of at least 550 are regarded as wireless communication systems satisfying these parameters, and a wireless communication system to be used is selected from among the wireless communication systems 8 satisfying the parameters. In other words, only when the sum total has become less than 550, it is judged that these parameters are not satisfied and inter-system handover is conducted.

At the time of communication start, a wireless communication system 8g having the largest weight in the sum total values shown in FIG. 29 is selected as a wireless communication system to be selected.

It is supposed that while video streaming transmission is being conducted by using the wireless communication system 8g the communication quality of the wireless communication system 8g is degraded because, for example, the user enters an underground market or the like and gets out of the service area of the wireless communication system 8g. Since the weight for the parameter of the communication quality (QoS) of the wireless communication system 8g becomes 0, the sum total of weights decreases from 703 to 503 and becomes less than 550, and consequently handover to another wireless communication system 8 is conducted. Wireless communication systems 8 that exceed 550 in the sum total of weights are wireless communication systems 8d, 8e and 8f. The wireless communication system 8f having the largest weight among them is selected as a wireless communication system 8 of handover destination.

It is supposed that the restoration of the quality of the wireless communication system 8g having the largest weight is found during the communication using the wireless communication system 8f on the basis of monitoring of other systems conducted by using the other system monitoring function in the wireless communication apparatus or on the basis of control information supplied from a base station of the wireless communication system 8f. Since the wireless communication system 8g has the largest weight, originally handover to the wireless communication system 8g is to be conducted. Since the currently used wireless communication system 8f also exceeds 550 in sum total of weights and satisfies the criterion of the parameter requested here, however, handover to the wireless communication system 8g is not conducted, but the communication using the wireless communication system 8f is continued.

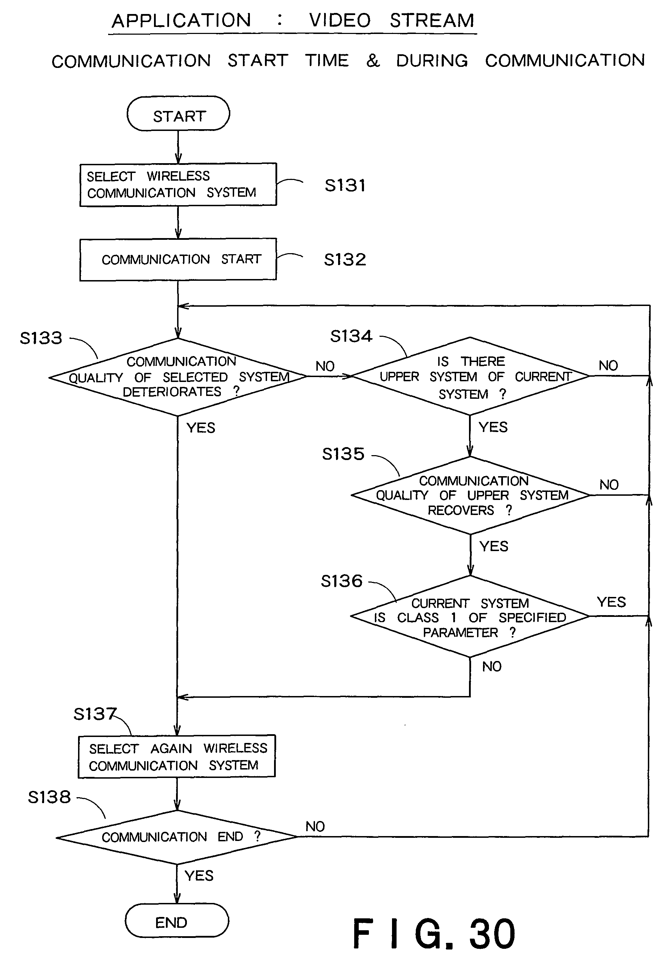

Summarizing the processing procedure heretofore described, a flow chart shown in FIG. 30 is obtained. First, a wireless communication system 8 is selected (step S131), and communication is started (step S132). Thereafter, it is determined whether the communication quality of the selected wireless communication system 8 (current system) has degraded (step S133). If the communication quality has not degraded, then it is determined whether there is a wireless communication system 8 that is more excellent in property than the current system (step S134). If there is a wireless communication system 8 that is more excellent in property than the current system, then it is determined whether the communication quality of the wireless communication system 8 has been restored (step S135). If the communication quality has been restored, then it is determined whether the current system belongs to class 1 classified on the basis of the specific parameter (step S136). If the current system does not belong to class 1, then the wireless communication system 8 is re-selected (step S137).

On the other hand, if the decision at the step S134 or S135 yields a negative result, or if the decision at the step S136 yields an affirmative result, then the processing at the step S133 is conducted again. Also when the decision at the step S133 has yielded an affirmative result, the processing at the step S137 is conducted. Thereafter, it is determined whether the communication has finished (step S138). If the communication has not finished, the processing at the step S133 and subsequent steps is repeated.

Thus, in the tenth embodiment, inter-system handover is conducted only when the criterion of the specific parameter is not satisfied or when the sum total of weights has become less than the threshold. As a result, it is possible to avoid unnecessary handover and implement stable communication.

### (Eleventh Embodiment)

In the eleventh embodiment, a wireless communication system 8 having a high priority is monitored preferentially.

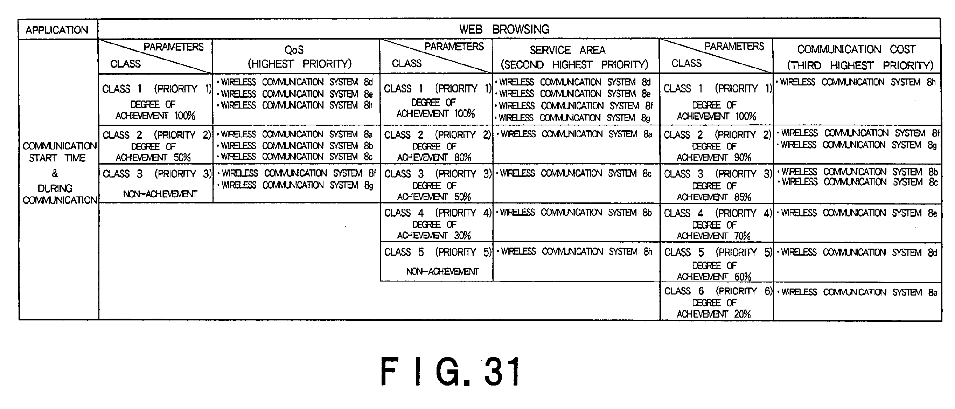

A wireless communication apparatus of the eleventh embodiment has a configuration similar to that shown in FIG. 27. FIG. 31 is a diagram showing a table obtained by classifying a plurality of wireless communication systems 8 into classes on the basis of adaptation degrees of parameters, in the case where the application is web browsing. At the time of communication start and during the communication, the wireless communication system 8 to be used is selected according to this table of classification. In the present embodiment as well, the wireless communication apparatus can conduct communication by using eight wireless communication systems 8, i.e., wireless communication systems 8a to 8h, in the same way as the first embodiment.

It is supposed that at the time of communication start a wireless communication system 8 to be used has been selected by using a parameter of the communication quality (QoS) as a parameter having the highest priority, a parameter of the service area as a parameter having the second highest priority, and a parameter of the communication cost as a parameter having the third highest priority as shown in FIG. 31. The wireless communication systems 8 are classified into classes on the basis of adaptation degrees of these parameters. As a result, a wireless communication system 8e belonging to classes having higher priorities is selected as a wireless communication system 8 to be used.

During communication using the wireless communication system 8e, the system monitor unit 20 in the wireless communication apparatus is monitoring wireless communication systems 8 included in a plurality of wireless communication systems 8 other than the wireless communication system 8e by way of precaution against handover to another wireless communication systems 8 caused by degradation or the like in communication quality. As for monitoring other wireless communication systems 8, all of other wireless communication systems 8 are not monitored evenly, but wireless communication systems 8 that become candidates for handover destination are monitored preferentially.

The wireless communication systems 8 to be monitored preferentially are selected by using the classification table shown in FIG. 31 in the same way as the selection of the wireless communication system 8 to be used. In this example, a wireless communication system 8 is selected during the communication as well, by using the same classification table as that at the time of communication start. In the classification table shown in FIG. 31, the wireless communication system 8d belonging to classes having the highest priority among wireless communication systems 8 other than the wireless communication system 8e currently used for communication is selected as a wireless communication system 8 having the highest priority to be monitored.

As for a wireless communication system 8 having the next highest priority to be monitored, the wireless communication system 8h, which belongs to class 1 in the parameter of the communication quality (QoS) having the highest priority, but which is classified to be non-adaptive for request in the parameter of the service area having the second highest priority, is not selected. The wireless communication system 8a, which belongs to class 2 in the parameter of the communication quality (QoS) having the highest priority and belongs to class 2 in the parameter of the service area having the second highest priority, is selected.

Monitoring of a wireless communication system 8 having higher priority is, for example, monitoring having a longer time, monitoring having a higher frequency, or a combination of them.

Thus, in the eleventh embodiment, when monitoring a wireless communication system 8 of handover destination, wireless communication systems 8 are provided with a priority order and wireless communication systems 8 having higher priority are monitored preferentially. Therefore, it becomes possible to conduct system switching at the time of handover more certainly and rapidly. And it is possible to provide a seamless wireless communication environment that does not make the user feel a break between wireless communication systems 8.

## Claims

1. A wireless communication apparatus, comprising:
a wireless communication unit configured to conduct wireless communication by selecting one wireless scheme among a plurality of wireless schemes capable of conducting wireless communication;
a storage which stores information obtained by classifying said plurality of wireless schemes into a plurality of classes, based on priorities set to said plurality of wireless schemes in accordance with at least one parameter; and
a selector which selects one wireless scheme by which said wireless communication unit conducts wireless communication, based on classes stored in said storage.

2. The wireless communication apparatus according to claim 1, further comprising a classification unit configured to classify said plurality of wireless schemes into a plurality of classes, based on the priorities of said plurality of wireless schemes;
wherein said storage stores a result of classification by said classification unit.

3. The wireless communication apparatus according to claim 2, wherein said classification unit classifies said plurality of wireless schemes into a plurality of classes for each parameter; and
said selector selects a wireless scheme to be used, based on the class set for each parameter.

4. The wireless communication apparatus according to claim 2, wherein said selector gives priority to each parameter, and selects the wireless scheme by which said wireless communication unit conducts the wireless communication, by preferentially taking into consideration the class corresponding to the parameter having higher priority.

5. The wireless communication apparatus according to claim 2, wherein said classification unit classifies said plurality of wireless schemes into said plurality of classes, based on degree of achievement for parameter.

6. The wireless communication apparatus according to claim 2, wherein said classification unit classifies said plurality of wireless schemes into said plurality of classes, based on at least one parameter for each communication type; and
said selector selects the wireless scheme by which said wireless communication unit conducts wireless communication, based on the classes stored in said storage in accordance with each communication type.

7. The wireless communication apparatus according to claim 2, wherein classification unit classifies said plurality of wireless schemes into said plurality of classes, based on at least one parameter in accordance with ordinary time and time of user's desire; and
said selector selects the wireless scheme by which said wireless communication unit conducts the wireless communication, based on the classes stored in said storage in accordance with either the ordinary time or the time of user's desire.

8. The wireless communication apparatus according to claim 2, wherein said classification unit classifies residual quantity in a battery into a plurality of stages, and classifies said plurality of wireless schemes into said plurality of classes based on at least one parameter for each of said plurality of stages.

9. The wireless communication apparatus according to claim 2, wherein said classification unit classifies said plurality of wireless schemes into said plurality of classes, based on at least one parameter at time of communication start and during communication; and
said selector selects the wireless scheme by which said wireless communication unit conducts wireless communication, based on the classes stored in said storage either at the time of communication start or during communication.

10. The wireless communication apparatus according to claim 1, wherein said selector selects the other wireless scheme belonging to the same class as that of the selected wireless scheme when the selected wireless scheme cannot conduct the wireless communication.

11. The wireless communication apparatus according to claim 2, wherein said classification unit classifies said plurality of wireless schemes into a plurality of classes based on adaptation degrees indicative of degree of compatibility with respect to said plurality of wireless schemes; and
said selector selects preferentially the wireless scheme belonging to the class having high adaptation degree when the wireless scheme for conducting the wireless communication is changed.

12. The wireless communication apparatus according to claim 1, further comprising a monitor unit configured to monitor at least one of operation states of the wireless schemes except for the wireless scheme selected by said selector and empty channel information of the other wireless schemes; and
said selector continuously selects the wireless scheme being currently selected when said monitor unit detects that a wireless scheme having higher priority than that of the wireless scheme being currently selected becomes available and belongs to the same class as that of the wireless scheme being currently selected.

13. The wireless communication apparatus according to claim 1, further comprising:
a weight unit configured to add weights corresponding to the respective parameters for each of said wireless schemes; and
a weight adding unit configured to add the weights corresponding to the parameters for each of said wireless schemes,
wherein said selector selects the wireless scheme by which said wireless communication unit conducts the wireless communication, based on the classes classified by said classification unit and the weight added by said weight adding unit.

14. The wireless communication apparatus according to claim 1, wherein said selector changes over the wireless scheme by which said wireless communication unit conducts the wireless communication when the weight added by said weight adding unit becomes less than a prescribed reference value.

15. A wireless communication method, comprising:
conducting wireless communication by selecting one wireless scheme among a plurality of wireless schemes capable of conducting wireless communication;
classifying said plurality of wireless schemes based on priorities set to said plurality of wireless schemes in accordance with at least one parameter, and storing a result of the classification into a storage; and
selecting a wireless scheme by which a wireless communication unit conducts the wireless communication, based on the classes stored in said storage.

16. The wireless communication method according to claim 15, classification for a plurality of classes is conducted for each of parameters; and
the wireless scheme to be used is selected based on the classes set to the respective parameters.

17. The wireless communication method according to claim 15, wherein the priority is given to each of the parameters, and the wireless scheme by which said wireless communication unit conducts the wireless communication is preferentially selected by taking into consideration the class corresponding to the parameter having high priority.

18. The wireless communication method according to claim 15, wherein said plurality of wireless schemes are classified into said plurality of classes based on degree of achievement for the parameter.

19. The wireless communication method according to claim 15, wherein said plurality of wireless schemes are classified into said plurality of classes based on at least one parameter for each of communication types; and
the wireless scheme by which said wireless communication unit conducts the wireless communication is selected based on the classes stored in said storage in accordance with the communication types.

20. The wireless communication method according to claim 15, wherein residual quantity of a battery is classified into a plurality of stages, and said plurality of wireless schemes are classified into said plurality of classes based on at least one parameter for each stage.
